# EUROPEAN PATENT SPECIFICATION

(11) **EP 1 667 444 B1**
(45) Date of publication and mention of the grant of the patent: **08.11.2017**
(21) Application number: 04773223.5
(22) Date of filing: 10.09.2004
(51) Int. Cl.: H04N 5/445

(54) **CONTENT SELECTION METHOD AND CONTENT SELECTION DEVICE**
INHALTSAUSWAHLVERFAHREN UND INHALTSAUSWAHLEINRICHTUNG
PROCEDE DE SELECTION DE CONTENUS ET DISPOSITIF DE SELECTION DE CONTENUS

(30) Priority: 11.09.2003 JP 2003319378; 11.09.2003 JP 2003319379
(43) Date of publication of application: 07.06.2006
(73) Proprietor: Panasonic Corporation, Kadoma-shi Osaka 571-8501 (JP)
(72) Inventor: KATAOKA, Mitsuteru, Osaka-shi, Osaka 540-6319 (JP)
(74) Representative: Dr. Gassner & Partner mbB
(86) International application number: PCT/JP2004/013579
(87) International publication number: WO 2005/027512

(56) References cited:
- EP-A1- 1 135 929
- WO-A1-97/46006
- JP-A- 11 025 541
- JP-A- 11 069 254
- JP-A- 2000 076 291
- JP-A- 2000 165 771
- JP-A- 2002 112 132
- JP-A- 2002 354 356
- US-A1- 2003 020 744
- US-A1- 2003 110 492

## Description

### TECHNICAL FIELD

The present invention relates to a method and a device for selecting a content which is to be recommended to a user, from among a plurality of content, and more particularly to a content selection method and a content selection device, which displays by using GUI (Graphic User Interface) the content which is to be recommended.

### BACKGROUND ART

With digitalization of television broadcast, a large number of channels are offered, and with popularization of broadband communication and Internet broadcast, a number of content available for viewing to a user is proliferating. The user selects content for actual viewing by acquiring a list of viewable content from an Electric Program Guide (EPG) or an Internet directory for a digital television broadcast. Due to the overly large number of viewable content that are available, selecting content for viewing has become extremely difficult to the user.

As an approach to solve such problem, a method and a device to automatically recommend content meeting the preference of the user are designed. In Japanese Laid-Open Patent Publication No. 09-83891, for example, a method for a device to automatically learn the preference of a user based on a history of television broadcast viewed by the user, for presenting the user with prioritized content based on the learned outcome is disclosed. Also, in another publication ("User Tekiou-gata Homepage Suisen Software 'Web Navigator' " by Hiroshi Kutsumi et al., Denshi Jouhou Tsuushingaku Ronbunshi 'D-II,' Vol. J84-D-II, No. 6, pp. 1149 through 1157, June 2001), a method for a device to automatically learn the preference of a user and recommending a homepage which meets the preference of the user is disclosed.

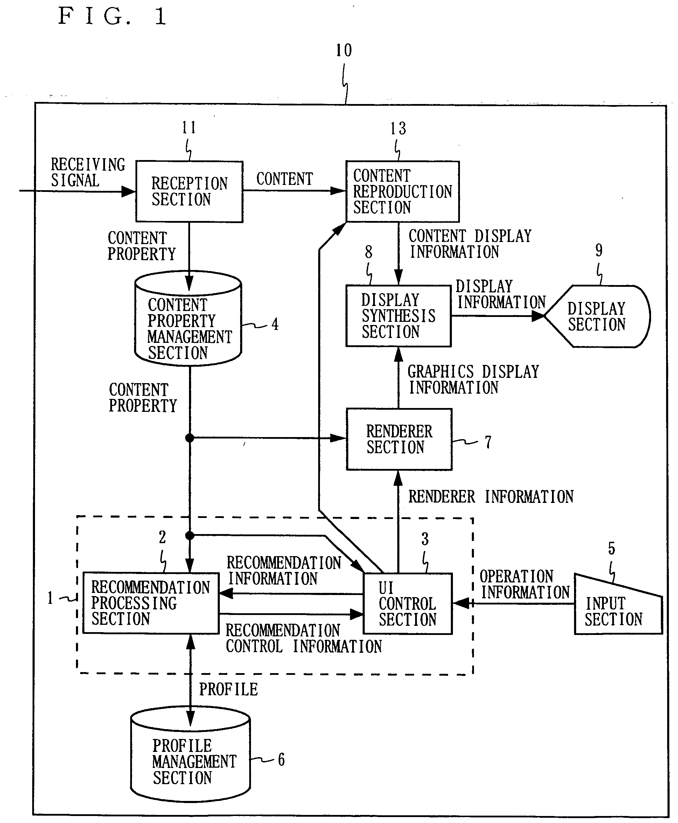

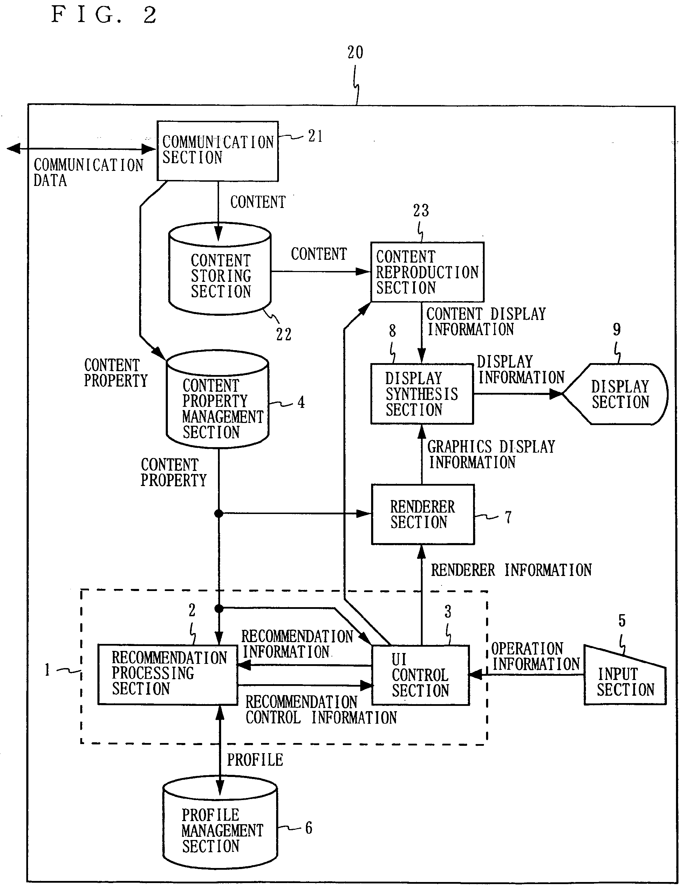

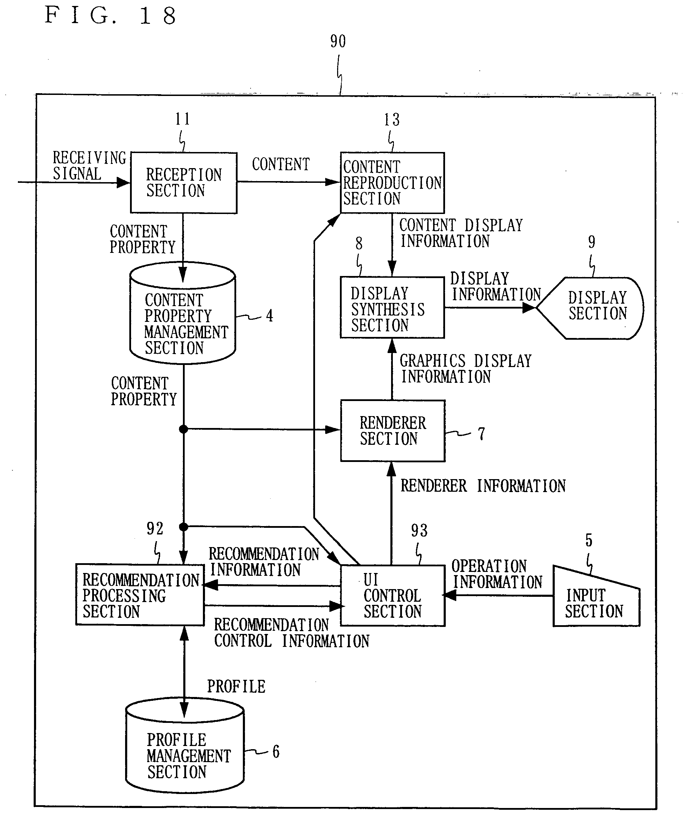

A conventional content selection device for suggesting content which meets the preference of a user to the user will be described with reference to FIG. 18. As shown in FIG. 18, the conventional content selection device 90 comprises: a reception section 11; a content reproduction section 13; a content property management section 4; an input section 5; a profile management section 6; a renderer section 7; a display synthesis section 8; a display section 9; a recommendation processing section 92; and an UI control section 93. Note that the setting of the content selection device will be described when an embodiment of the present invention is described (See FIG. 1 and FIG. 2). In FIG. 18, components which are also indicated in FIG. 1 are denoted by the same reference marks as those used therein and the description thereof are to be briefed.

The reception section 11 executes a crypt-decryption procedure and a correction procedure for a received signal including content, and outputs content and property data (hereinafter referred to as content property) attached thereto. The content reproduction section 13 decodes the content outputted by the reception section 11. The content property management section 4 stores and manages the content property outputted by the reception section 11. The content property includes, for example, a broadcast time, date and channel of a program, a genre of a program, a summary of content, etc. The input section 5 is an input means to input an instruction given by a user. The UI control section 93 is a control section for the entire content selection device 90. The UI control section 93 modifies the internal status when an instruction is given by the user via the input section 5, and controls the recommendation processing section 92 and the renderer section 7.

The profile management section 6 stores and manages preference information (hereinafter referred to as profile) of the user. In accordance with control by the UI control section 93, the recommendation processing section 92 executes, based on the content property stored in the content property management section 4, an acquisition of the information related to the content which is recommended to the user, and an update of the profile stored in the profile management section 6. In accordance with the control by the UI control section 93, the renderer section 7 generates a bitmapped image, which is to be displayed on a screen. The display synthesis section 8 synthesizes an outcome of a decoding executed by the content reproduction section 13, with the bitmapped image generated by the renderer section 7. The display section 9 displays on the screen the outcome of a synthesis executed by the display synthesis section 8.

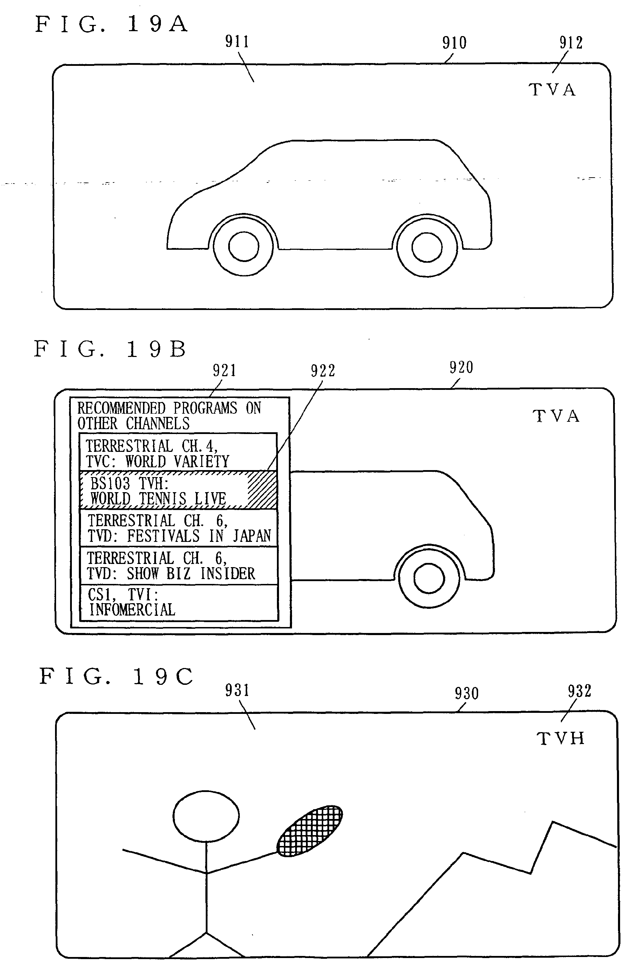

FIG. 19A through FIG. 19C each show a GUI display according to the conventional content selection device 90. A display 910 shown in FIG. 19A is an initial screen displayed before a content selection process is to be executed. In the display 910, a program image 911 of a television broadcast is displayed on the entire screen. In the program image 911, a logo mark 912, which indicates a channel (TVA) broadcasting the program, is included.

A display 920 shown in FIG. 19B is displayed when the user presses a recommended-program-on-another-channel-display-button while the window 910 is being displayed. In the window 920, a window 921 generated by the content selection device 90 is displayed superimposing on a program image of a television broadcast. In the window 921, a plurality of programs currently on broadcast on other channels are indicated in a form of a list in the order of recommendation to the user. On one program among the plurality of the programs indicated on the window 921, a focus 922 is given. As the user presses a cursor up/down button on the input section 5, the focus 922 moves up or down over the programs.

The content selection device 90, to display the display 920 in which the window 921 is superimposed on a program, executes as follows: the user presses the recommended-program-on-another-channel-display-button; the input section 5 outputs operation information indicating that the button is pressed; the UI control section 93 receives the operation information, and outputs to the recommendation processing section 92 recommendation control information instructing to select a program which is to be recommended among the plurality of programs currently on broadcast. The recommendation processing section 92 receives the recommendation control information, finds content property stored in the content property management section 4, and reads out the plurality of programs currently on broadcast and the content property thereof. Next, the recommendation processing section 92 reads out a profile from the profile management section 6, computes the goodness of fit between the content property and the profile. Further, the recommendation processing section 92 sorts the plurality of programs in the order of the degree of the goodness of fit with the profile, and the outcome is outputted as the recommendation information. The UI control section 93 receives the recommendation information and outputs to the renderer section 7 renderer information so as to display the window 921. By the aforementioned process, the display section 9 displays the display 920 in which the window 921 is superimposed over a program image.

A display 930 shown in FIG. 19C is displayed when the user presses an Enter button of the input section 5 while the display 920 is being displayed. When the Enter button is pressed, the program, which is given the focus 922 thereupon in the window 921, is to be displayed on the entire screen. By this, a new program image 931 (here, an image of a program "WORLD TENNIS LIVE") is displayed on the entire screen of the display 930. On the program image 931, a logo mark 932, which indicates the channel (here, TVH) broadcasting the program, is included.

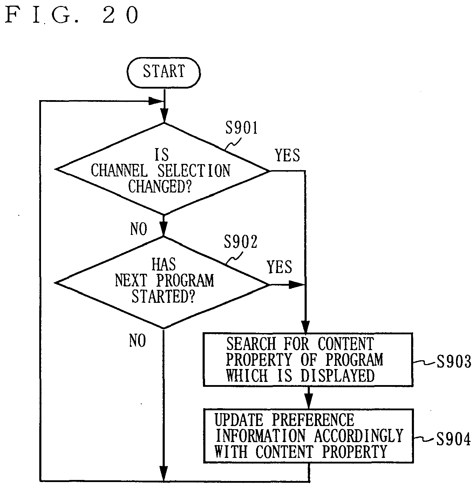

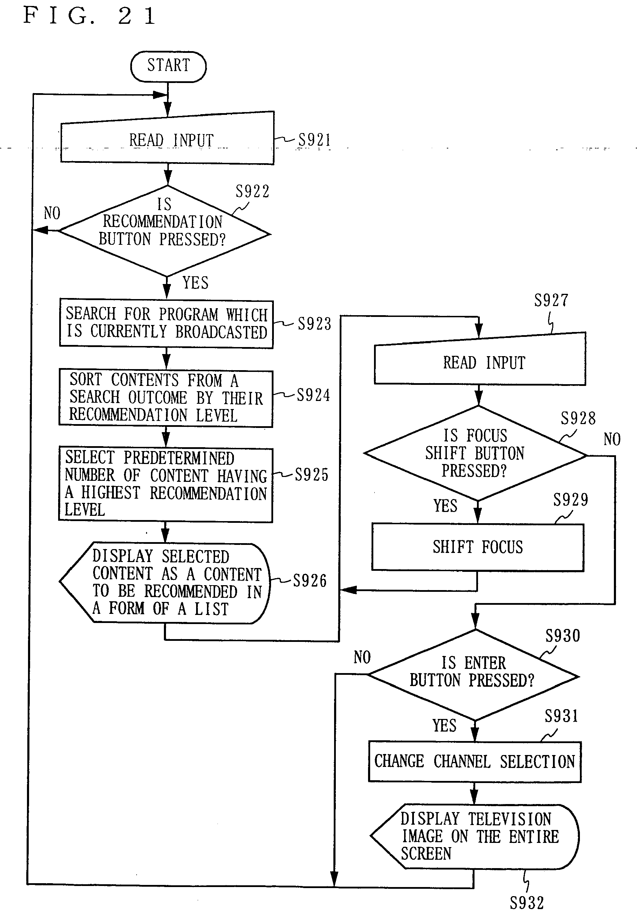

In the conventional content selection device 90, there are basically two procedures being executed: a process where a preference of the user is learned (FIG. 20) ; and a process where content (program) recommendation is made based on the preference of the user (FIG. 21). FIG. 20 is a flowchart showing the preference learning procedure executed by the content selection device 90. In the preference learning procedure, the following steps are executed.

(Step S901) The process by the content selection device 90 is to advance to Step S903 when the user changes channel selection, or to advance to Step S902 any other time. In the step, the UI control section 93 outputs, when operation information outputted by the input section 5 indicates a change in channel selection, to the recommendation control section 92 recommendation control information which indicates that the change has been made.

(Step S902) The process by the content selection device 90 is to advance to Step S903 when a following program starts, or to advance to Step S901 any other time. In the step, the UI control section 93 readouts from the content property management section 4 the content property of the following program on a currently selected channel, and determines whether or not the following program has started by comparing the program start time, which is included in the content property, with the current time. If the following program had started, the UI control section 93 outputs to the recommendation processing section 92 recommendation control information which indicates that the program had started.

(Step S903) The content selection device 90 finds the content property of the program currently being displayed. In the step, the recommendation control information outputted by the UI control section 93 in the step S901 or Step S902 functions as a trigger for the recommendation processing section 92 to begin reading the content property of the program currently displayed out of the content property management section 4.

(Step S904) The content selection device 90 updates the preference information in accordance with the content property found in the Step S903. In the step, the recommendation processing section 92 updates, based on the content property found in the step S903, a profile (preference information) stored in the profile management section 6. An update method for a profile can be chosen freely. For example, as a basic method for updating, statistical information, which indicates the value frequently taken by each found content property, can be used as the profile. After the Step S904, the process by the content selection device 90 is to advance to Step S901.

As described above, in the content selection device 90, the profile is updated when a user changes a channel selection and when a program following a current program starts. This means that a profile reflects all contents viewed by the user. Therefore, the profile indicating a preference of the user can be found.

FIG. 21 is a flowchart showing a program recommendation process executed by the conventional content selection device. US 2003/0020744 A1 discloses such a conventional process. The following steps are executed by the program recommendation process.

(Step S921) The content selection device 90 reads out an input. In the step, the input section 5 outputs operation information which corresponds to an operation performed by the user. Note that, even with no input, the process by the content selection device 90 is to advance to a next step immediately (here, to Step S922), rather than to stand by. Note that in a field of computer programming, to advance to a next step without standing by when there is no input is referred to as "Non Block".

(Step S922) The process by the content selection device 90 is to advance to Step S923 when a recommendation button is pressed, or to Step S921 any other time. In the step, the UI control section 93 determines whether or not operation information, which is outputted by the input section 5, indicates that the recommendation button is pressed. The UI control section 93 outputs, when given an affirmative determination, to the recommendation processing section 92 recommendation control information which instructs to generate a list of recommendation.

(Step S923) The content selection device 90 finds a program currently on broadcast. In the step, the recommendation processing section 92 receives the recommendation control information outputted by the UI control section 93 in the Step S922, finds a list of program currently on broadcast by searching the content property stored in the content property management section 4.

(Step S924) The content selection device 90 sorts the plurality of contents, which are included in the search, in an order of the recommendation level from high to low. In the step, the recommendation processing section 92 determines the recommendation level of each of the currently broadcasted program, which is found in the step S923, for the user, by comparing the content property, which is stored in the content property management section 4, of each program with the profile stored in the profile management section 6. Then, the recommendation processing section 92 sorts the plurality of contents included in the search in an order of the determined recommendation level from high to low.

(Step S925) The content selection device 90 selects from among the search result a predetermined number of contents having the highest recommendation level. In the step, the recommendation processing section 92 selects from among the list of program sorted in the step S924 a predetermined number of contents having the highest recommendation level, and outputs to the UI control section 93 the list of the selected contents that are arranged in the order of recommendation level from high to low as recommendation information.

(Step S926) The content selection device 90 displays the selected contents in a form of a recommendation list. In the step, the UI control section 93 outputs to the renderer 7 renderer information so that the list of the content (program), which is included in the recommendation information outputted by the recommendation processing section 92, is displayed. By this, the display section 9 displays a list of program to be recommended.

(Step S927) The content selection device 90 readouts an input in the same manner as in the Step S921.

(Step S928) The process by the content selection device 90 is to advance to Step S929 when a focus up/down button is pressed, or to Step S930 any other time. In the step, the UI control section 93 determines whether or not operation information, which is outputted by the input section 5, indicates that the focus up/down button is pressed.

(Step S928) The content selection device 90 moves the focus on the screen. In the step, the UI control section 93 outputs renderer information to the renderer section 7 so as to adjust the rendering of the focus, which is displayed on the screen, accordingly with the way focus button is operated. After the Step S929, the process by the content selection device 90 is to advance to the Step S927.

(Step S930) The process by the content selection device 90 is to advance to Step S931 when the Enter button is pressed, or to Step S921 any other time. In the step, the UI control section 93 determines whether or not the operation information outputted by the input section 5 indicates that the Enter button is pressed.

(Step S931) The content selection device 90 changes the channel selection to the channel which is broadcasting a program upon which a focus was given when the Enter button is pressed. In the step, the UI control section 93 outputs a request to cause the content reproduction section 13 to select the channel which is broadcasting the program upon which the focus is given. This functions as a trigger for the content reproduction section 13 to change the channel selection.

(Step S932) The content selection device 90 displays a television image on the entire screen. In the step, the UI control section 93 empties renderer information of the renderer section 7. As a result, the renderer 7 no longer outputs bitmapped data; and the display section 9 displays on the entire screen only the decoding outcome of the content reproduction section 13. The process by the content selection device 90, after the Step S932, is to advance to the Step S921.

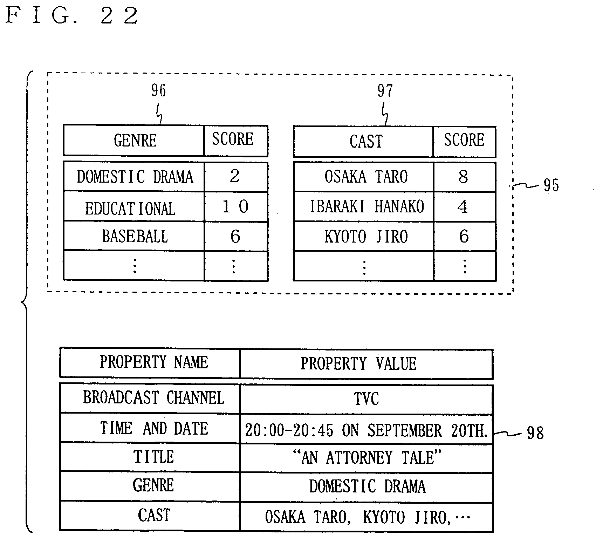

In the conventional content selection device 90, a data structure shown in FIG. 22 is applied. In FIG. 22, an example of a profile 95 stored in the profile management section 6, and an example of content property 98 extracted from the reception section 11 are shown. The profile 95 includes a tabular format data 96 in which points given to each genre are indicated, and a tabular format data 97 in which points given to each cast are indicated. In the data 96 and 97, a high point is given to an item matching the preference of the user. In the content property 98, a property name for each of five content properties (broadcast channel, time and date, title, genre, and cast) and a property value are included.

The conventional content selection device 90 faces a plurality of challenges as stated below. Note that each "challenge n", where the n is a natural number, corresponds to "embodiment n" described below.

(Challenge 1) A method for the conventional content selection device to automatically learn the preference of a user in order to find a profile based on a user operation has an advantage in which the profile can be found without forcing the user to perform any specific operation. However, the same method has a disadvantage in that the content selection device is not able to make an appropriate recommendation until the user performs the operation for a certain number of times. For example, since TV programs are programmed on a weekly basis, at least one week or more, if possible, of learning period is necessary to obtain a profile. Further, in a case where a plurality of users operate a single device such as a television receiver, the preference of a user who uses the television frequently is forcibly reflected; and the preference of a low frequency user tends to be ignored.

(Challenge 2) When the number of content, which is to be displayed, becomes too large, it will take too long to search through the recommended content. Therefore, the number of content which is to be recommended in one setting needs to be restricted to a certain level. Giving a restriction on the number of content, which is to be recommended, however, may exclude the content matching the preference from being displayed in spite of the availability. In order to find a content that matches preference under the restriction of the number of the content to be recommended, the user needs to input some type of condition to narrow the content to be searched from, and then, have a different set of contents, which is to be recommended, displayed once again. However, understanding the logical formula applied for searching for a content, and inputting a character string of a cast or a keyword can be difficult for a user. Therefore, for a general user, inputting a search condition is an extremely difficult task. Also, even to narrow the content to be searched from by using genres, a task of selecting a preferred genre among several tens or more of genres is complicated. By any means, selecting content by genre is not easy to do for a user who does not correctly grasp what genres are available, and in what genres the user is interested.

(Challenge 3) The content selection device is also capable of recommending a viewing course comprised of a plurality of programs that are sequenced chronologically. However, the user may, depending on a mood of a day, choose to exclude a program which belongs to a genre the user usually prefers. When the user' s favorite sport team has been on a streak of poor performances, the user may consider viewing content which belong to a genre besides sport. Also, the user may have a change of heart after actually viewing a list of recommended content, or want to find a more preferable viewing order by adjusting the number of content to be recommended. The aforementioned processes may be achieved by repeatedly adjusting the search condition, but for the general user, inputting or adjusting the search condition is not easy, and can be a heavy burden.

(Challenge 4) As stated in the challenge 2, for the general user inputting a search condition is an extremely difficult operation. Also, even though the content property (e.g., genre, cast, etc.) associated with content has, to an extent, something to do with preference of the user toward content, the content property is merely a measure based on one's experience. For example, the user may come across content matching his or her preference, but upon actual viewing of the content, the user may not like the content. There also may be an opposite case. Further, there may be a case where content which can be classified into more than one genre. For example, content may be classified as one genre by a distributor of the content, and be classified as another according to the user's understanding; or a case where a distributor has a problem assigning a genre to content correctly or consistently, and, as a result, content is not found appropriately.

(Challenge 5) Even after the user goes through trouble of inputting a search condition, there may be, at this point, a case where no content satisfies the search condition. In such case, the search condition the user went through trouble inputting may be wasted, and the user may need to input a search condition each time the user thinks that new content may be appearing. As described above, appropriate content may not be recommended even with a great effort.

(Challenge 6) There may be a method in which the preference of the user may be learned automatically by observing a content viewing activity of the user. With this method, since the user does not have to perform special operation, there is a small burden on the side of the user. With this method, however, true intention (whether the user is really interested in something, or the user viewed content but the user is disappointed in the content, etc.) of the user cannot be found automatically. A content evaluation reflecting the user's true intention accurately cannot be measured by a content selection device unless the user inputs it personally. However, with a method where a content evaluation is relied upon an autonomous declaration operation by the user, the user may forget to give an evaluation or the user may not evaluate at all since the user does not know that the user is entitled to give an evaluation. On the other hand, if a user is forced with an evaluation input after each viewing of content, the user may be bothered.

(Challenge 7) Unless the user knows that the content selection device is equipped with a content recommendation function, the function would not be used. Also, in order to use the content recommendation function, the user is required to perform some type of operation (pressing a recommendation button on a remote controller, for example), which the user may find troublesome. Further, even if the user presses the recommendation button, there may not be content matching the preference of the user at the time. When such case persists, the user may be disappointed in the content recommendation function, and hence, stop using the function.

Thus, the present invention is aimed to provide content selection method and content selection device to solve the above-mentioned challenges.

### DISCLOSURE OF THE INVENTION

In order to achieve above object, the present invention has the following features. Note that "*n*th aspect" stated below corresponds to each "nth embodiment" described later. The scope of the invention, which is defined by its independent claims, is based on the first embodiment. (First Aspect) A user explicitly inputs an evaluation (e.g., like, dislike, etc.) of a content included in a form of a list (e.g., electric program guide) of contents, which is to be displayed on a screen. The outcome of the evaluation given to the content is displayed in the list. Once the user inputs the evaluation, preference information of the user (a profile) is updated, and contents, which are to be recommended, are to be searched for. Contents which are to be recommended are displayed, upon being found, in the form of a list. The user inputs an evaluation of a content without waiting for the end of the search process for a content to be recommended.

(Second Aspect) A content to be recommended, and an item defining a condition for a search for a content are displayed on the screen. The item may be information which matches the preference of the user or information which the user selects explicitly. When the user selects an item, the content which is to be recommended is updated. The user may select another item without waiting for the end of the updating process. Also, the user may search for content which is to be recommended by specifying a plurality of items (by tying a plurality of items by using "AND" or "OR").

(Third Aspect) A recommended viewing course (where recommended contents are arranged in a chronological order of the broadcast time thereof), and an item defining the condition for a search for a content are displayed on the screen. The item may include information which matches the preference of the user or information which the user selects explicitly. When the user selects an item, the recommended viewing course is to be updated. The user may select an item without waiting for the end of the updating process of a recommended viewing course. Also, the user may request a recommended viewing course by tying a plurality of terms by using "AND" or "OR".

(Fourth Aspect) Contents, which are similar to a content on which the user keeps an eye, may be searched for and displayed on the screen as contents to be recommended, wherein the search is conducted with the content on which the user keeps an eye as a starting point thereof. Together with the contents which are to be recommended, an item to define a search condition is to be displayed on the screen. By using a profile (preference information of a user), an item matching the preference of the user is to be displayed.

(Fifth Aspect) In a case where a content is searched for but the search found no content satisfying the condition, the user may have an option to be notified about a content if a content satisfying the search condition is found. If the user chooses to be notified, the search condition is to be stored, and each time a new content is found, it is determined whether or not the content satisfies the search condition. When the content satisfying the search condition is found, the user is so notified.

(Sixth Aspect) If a content, which is viewed by the user, belongs to a predetermined classification, and the content is viewed by the user for a first time, the user is invited to give an evaluation of the content when the content is finished being displayed.

(Seventh Aspect) When a content ID (identification information of content) is partitioned and inputted successively, a list of contents, which are to be recommended, is displayed while the content ID is being inputted. During this period, if the content from the list is selected by the user, the content is displayed, and any other time, the contents specified by the content ID are displayed. When the content identification is finished, the list of the contents which are to be recommended are no longer displayed. A content ID is, for example, an event id, which is an identifier for identifying a program for digital television broadcast, or an URI, or the like, for a content which is found via the Internet. Instead of the content ID, a communication line (a broadcast channel or an address for multicast communication, for example) for transmitting a content may be specified. For example, when one button is pressed for specifying a transmission path from a ground-based analogue broadcast, a ground-based digital broadcast, and a BS broadcast, whereupon a three-digit number is pressed to identify a channel, there are, in total, four procedures involved for inputting a communication channel to transmit the content. During the process, a list of contents, which are to be recommended from among a plurality of contents, which are being transmitted in one communication channel which may be inputted at this point, is displayed.

The first through the seventh aspect of the present invention have following effects as stated below. Note that "nth effect" stated below corresponds to each "nth embodiment" described later.

(First Effect) A user can cause the present invention to learn the preference of the user forcefully. Therefore, time required for the learning may be shortened as necessary; or when a plurality of users share one device, a preference of a user, who uses the device rarely, can be learned. Further, since a user can cause the present invention to learn a preference of the user based solely upon like and dislike regarding a content, the user may perform the operation without having to know a complicated notion of a search condition. The burden on the side of the user, therefore, is extremely small. Further, each time the user inputs an evaluation for a content, a list of contents which are to be recommended is displayed on a screen. As described above, since the user input is met with an immediate response by a display of the contents to be recommended, the user is encouraged to input an appropriate evaluation.

(Second Effect) In order to restrict a range of contents to derive recommended contents from, the user can specify a search condition to narrow the range of contents from which to derive a recommendation only by specifying the item, thus it is possible to maintain a small operational load for the user. Also, when an item matching the preference of the user is displayed with priority, the user can conveniently select the item the user prefers. Also, if the user specifies a plurality of items at once, a search can be conducted by using the plurality of items by using "AND" and "OR" in a very simple operation. Further, if the user specifies an item by a method where the user specifies an optional item, the selected item will be displayed by itself next time such that the user can specify the item. Therefore, with a slight extra effort, a sort of customization can be achieved. The customization simply means increased number of items. As described above, the user does not need to memorize new operation since the operation is seamlessly expanded.

(Third Effect) Since the user only has to specify an item in order to specify a condition, which is used to search for a viewing course, it is possible to maintain a small workload for the user. Also, when an item that matches the preference of the user is displayed with priority, the user can conveniently select the item the user likes. Also, when the user specifies a plurality of items at once, a search can be conducted using the plurality of items by using "AND" and "OR" in a very simple operation. Further, if the user specifies an item by a method where the user specifies an optional item, the selected item will be displayed by itself next time such that the user can be specified the item. Therefore, with a slight extra effort, a sort of customization can be achieved. The customization simply means increased number of items. As described above, the user does not need to memorize new operation since an operation is seamlessly expanded.

(Fourth Effect) With the content, which the user actually views and decides that the content matches the preference of the user, as a starting point, a search for a content similar thereto may be conducted. Since the content which is similar to the content matching the preference of the user is to be recommended automatically, the user can find a content which matches the preference of the user without having to input a search condition. Also, since the user knows that a content to be recommended matches the preference of the user by actually having viewed the content, the content that matches the preference can be searched for even if the content property is understood differently between when the content property is assigned and when the content is used, or even if the content property is not understood. Further, if the user selects a plurality of items, the user will be allowed to shift through the items as necessary, thus it becomes possible to find more appropriate content with an easy operation.

(Fifth Effect) When there is no content to satisfy the search condition, the present invention automatically asks of the user whether or not to be notified when a content satisfying the search condition appears in the future, and therefore it is no longer necessary, unlike the conventional device, to repeatedly input the same search condition just when the user assumes that new content may be available. Also, the function to notify the user can be executed even if the user does not look for it in a menu of the device to perform it, or even if the user is not aware of the function. Also, since an already inputted search condition is to be used later, inputting the same search condition is no longer necessary and thus the operation is simplified.

(Sixth Effect) When the user views an initial episode of a series program, or a content from a specified genre for a first time, an evaluation is requested when the content, which is currently broadcasted, ends. Since the present invention does not force the user to input an evaluation for all contents, the user is free from extra inputting operation. Also, since the evaluation is given after a content has been viewed, an evaluation, which truly reflecting the content, can be given.

(Seventh Effect) When the user inputs a content ID which is already familiar to the user, a list of contents which are to be recommended, if there are any, will be displayed during a procedure which is identical to a procedure executed when selecting a content. The user may continue with an inputting operation of already familiar content ID until the operation is completed, and disregard the display of the list of recommendation; or the user may select a content from the list of recommendation. As described above, even a user, who does not know the content recommendation function or the operation method thereof, can use the content recommendation function, since a content to be recommended is displayed additionally without the user having to explicitly request for the function when a familiarized operation is being executed. Further, since the user implicitly expects an appropriate content to be recommended when the user explicitly calls for a content recommendation function, the user feels disappointed if appropriate content is not recommended. According to the present invention, however, a user will not be disappointed since the user does not have the expectation of appropriate recommendation. Also, the present invention is capable of recommending only when an appropriate recommendation can be made.

### BRIEF DESCRIPTION OF THE DRAWINGS

FIG. 1 is a diagram showing a setting of a content selection device, which is compatible with digital television broadcast, of the present invention.
FIG. 2 is a diagram showing a setting of a content selection device, which is compatible with network communication, of the present invention.
FIG. 3A through FIG. 3C are diagrams each showing a GUI display for a content selection device according to a first embodiment of the present invention.
FIG. 4 is a flowchart of a preference learning process of the content selection device according to the first embodiment.
FIG. 5A through FIG. 5C are diagrams each showing a GUI display for a content selection device according to a second embodiment of the present invention.
FIG. 6 is a flowchart of a recommendation rank narrowing process for the content selection device according to the second embodiment of the present invention.
FIG. 7A and FIG. 7B are diagrams each showing a GUI display for a content selection device according to a third embodiment of the present invention.
FIG. 8 is a flowchart of a viewing course generation process of the content selection device according to the third embodiment of the present invention.
FIG. 9A and FIG. 9B are diagrams each showing a GUI display for a content selection device according to a fourth embodiment of the present invention.
FIG. 10 is a flowchart of a search process for a program similar to focus content of the content selection device according to the fourth embodiment of the present invention.
FIG. 11A and FIG. 11B are diagrams each showing a GUI display for a content selection device according to a fifth embodiment of the present invention.
FIG. 12 is a flowchart of a continuous search setting process of the content selection device according to the fifth embodiment of the present invention.
FIG. 13 is a flowchart of a continuous search process of the content selection device according to the fifth embodiment of the present invention.
FIG. 14 is a diagram showing a GUI display for a content selection device according to a sixth embodiment of the present invention.
FIG. 15 is a flowchart of a program evaluation input process of the content selection device according to the sixth embodiment of the present invention.
FIG. 16A and FIG. 16B are diagrams each showing a GUI display for a content selection device according to a seventh embodiment of the present invention.
FIG. 17 is a flowchart of a channel selection candidate display process of the content selection device according to a seventh embodiment of the present invention.
FIG. 18 is a diagram showing a configuration of a conventional content selection device.
FIG. 19A through FIG. 19C are diagrams each showing GUI display for the conventional content selection device.
FIG. 20 is a flowchart of a preference learning process of the conventional content selection device.
FIG. 21 is a flowchart of a program recommendation process of the conventional content selection device.
FIG. 22 is a diagram showing a data structure of the conventional content selection device.

### BEST MODE FOR CARRYING OUT THE INVENTION

Hereinafter, a content selection device according to first to seventh embodiments of the present invention will be described with reference to FIGS. In each embodiment, a content selection method and a content selection device that are used for a program search using an electric program guide for digital television broadcast, and a content search for motion picture content distribution and for Internet broadcast will be described.

Prior to detailed description of each embodiment, common configuration of the content selection device for each embodiment will be described. FIG. 1 and FIG. 2 are diagrams each showing a setting of the content selection device according to each embodiment of the present invention.

A content selection device 10 shown in FIG. 1 is a content selection device which is compatible with digital television broadcast. The content selection device 10 comprises a recommendation processing section 2, a UI control section 3, a content property management section 4, an input section 5, a profile management section 6, a renderer section 7, a display synthesis section 8, a display section 9, a reception section 11 and a content reproduction section 13. The content selection device 10 receives a signal containing content from a broadcast station (not shown).

The reception section 11 executes a crypt-decryption procedure and a correction process for a received signal so as to output content and property data (content property) associated thereto. The reception section 11 is, for example, a tuner module of a digital television.

In the content reproduction section 13, the content outputted by the reception section 11 is inputted. The content reproduction section 13 decodes the inputted content, and outputs a decoded signal (hereinafter, referred to as content display information). In the case where content is an MPEG-2 (Motion Picture Expert Group-2) based image/audio signal, the content reproduction section 13 is an MPEG-2 decoder, or the like.

The content property management section 4 stores and manages the content property outputted by the reception section 11. The content property is property information, which is associated to a content, including: a method to find a content (e. g. , a broadcast time and date for digital television broadcast; a URI (Uniform Resource Identifier) of the Internet, etc.); a classification (e.g., a program genre, a classification for search engine, etc.) of content; and a summary, a related key word, billing information, cast (character) of content. The content property for digital television broadcast includes data that constructs an electric program guide. The content property management section 4 outputs a required part of the stored content property, as necessary, in response to a request from the recommendation processing section 2, the UI control section 3 or the renderer section 7.

The input section 5 is an input means for inputting an instruction from the user. The input section 5 converts a physical operation performed by the user into operational information, which can be processed in the content selection device 10, and outputs the processed information. The input section 5 is, for example, a combination of a pointing device such as a keyboard or a mouse, a microphone and a speech recognition engine.

The UI control section 3, which is a control section for the entire content selection device 10, executes a state transition for the entire content selection device 10, and manages an interaction process held with the user by using GUI. To be more specific, the UI control section 3, in order to manage a display shown on the display section 9, outputs renderer information (a renderer command for a letter or figure shape) to the renderer section 7 for setting a display image, and executes an update and a state transition when an instruction from the user is inputted through the input section 5.

The profile management section 6 stores and manages information which shows preference (profile) of the user. The profile section 6 is, for example, a storage medium such as a semiconductor memory or a magnetic storage medium.

The recommendation processing section 2 receives a signal (hereinafter referred to as recommendation control information) which indicates a process request from the UI control section 3, and outputs information (hereinafter referred to as recommendation information) related to the content to be recommended to a user based on the content property stored in the content property management section 4. The recommendation processing section 2, which is connected to the profile management section 6, updates the profile stored in the profile management section 6 when generating recommendation information. A profile is updated based on the operation information outputted by the input section 5, the content property, and the like, of the program which is currently on display.

The renderer section 7 converts the renderer information which is outputted by the UI management section 3 into a bitmapped image (hereinafter referred to as graphics display information) on a screen. The renderer section 7 is also operable to generate, based on the content property outputted by the content property management section 4, graphics display information for displaying an electric program guide.

The display synthesis section 8 retrieves a bitmapped image signal (hereinafter referred to as display information) by synthesizing the content display information outputted by the content reproduction section 13 with the graphics display information outputted by the renderer section 7. During this period, the display synthesis section 8 executes an image synthesis process referred to as overlay in regards to the content display information and the graphics display information. The display section 9 converts the display information which is retrieved by the display synthesis section 8 into a physical representation that is recognizable to a user, and thereby presenting a user with a display. The display section 9 is, for example, a cathode-ray tube or a liquid crystal display panel of a television receiver.

A content selection device 20 shown in FIG. 2 is a content selection device which corresponds to network communication. The content selection device 20 is the same as the content selection device 10 shown in FIG. 1 with the reception section 11 of the latter being replaced with a communication section 21 and a content storing section 22 of the former. For the components shown in FIG. 2, which are also shown in FIG. 1, the identical reference marks are given and the descriptions thereof are omitted.

The content selection device 20 is connected to a server (not shown) through a communication network (not shown). The communication section 21 reads, by accessing the server, content and content property. When a communication network is the Internet which communicates by using TCP/IP (Transmission Control Protocol/Internet Protocol), for example, the communication section 21 is comprised of a protocol stack of TCP/IP, or the like, which includes an Ethernet® interface and the upper layer communication program thereof.

The content storing section 22, which is comprised of, for example, a semiconductor memory, such as RAM (Random Access Memory), is a buffer for temporarily storing the content that is outputted by the communication section 21. When the content is so called continuous media such as an image, a voice or an animation, in which the subject matter of the content changes with passage of time, the reception speed of the communication section 21 for content reception and the reproduction speed of the content reproduction section 13 need to be synchronized. The content storing section 22, therefore, temporarily stores the content outputted by the communication section 21, and outputs the stored content at the speed requested by the content reproduction section 13.

The content selection device according to each embodiment executes a characteristic GUI control as a control section 1, which is comprised of a recommendation section 2 and a UI control section 3. Hereinafter, a GUI display for the content selection device according to each embodiment, and the detail of a process executed for the GUI display will be described. Note that the content selection device according to each embodiment may be comprised of either the component shown in FIG. 1, or the component shown in FIG. 2.

### (First Embodiment)

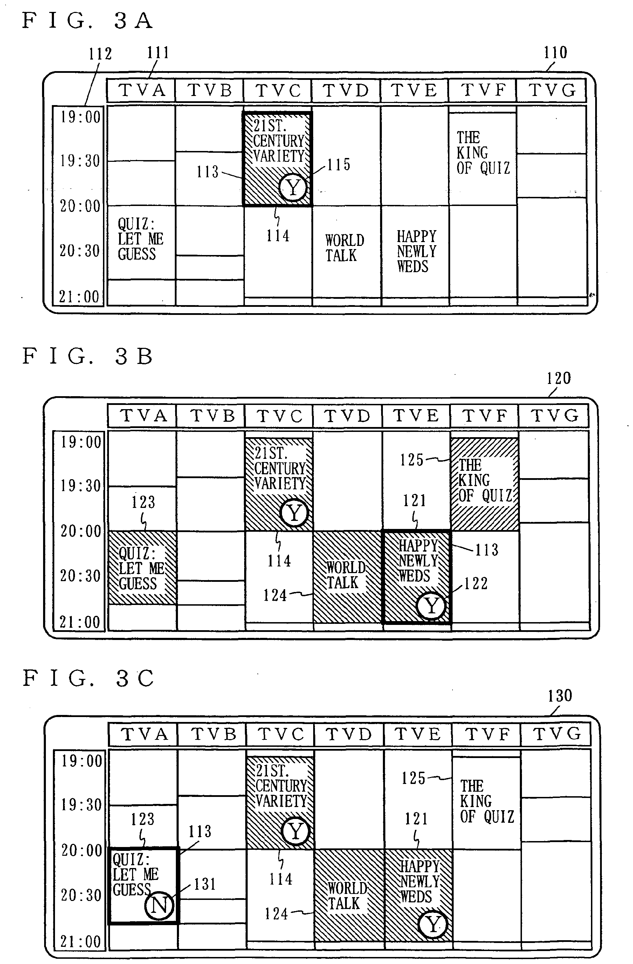

In a first embodiment, a GUI display will be described when the same executes an interaction process with the user by using an electric program guide (EPG). FIG.3A through FIG. 3C are diagrams each showing a GUI display for the content selection device according to the first embodiment. A display screen of the content selection device changes from display 110 to display 120 and then to display 130 as operated by the user. On each of the three displays, an EPG is displayed. In the EPG, a broadcast station name 111 and a time period 112 are respectively arranged horizontally and vertically, wherein each program is expressed in a rectangle area. Also, in the EPG a program (hereinafter referred to as a focus program) to which the user has been paying attention is displayed with a focus 113. Also, when the content selection device 10 determines that a program satisfies the preference of the user, the program is displayed in a different mode compared with the rest of the programs (here, displayed with shade).

A display 110 shown in FIG. 3A is displayed when the user gives an evaluation "LIKE" to a program 114. The focus 113 in the display 110 highlights the outline of the program 114 to indicate that the program 114 is a focus program. When the user operates the input section 5, the focus 113 shifts up/down and left/right to an adjacent program.

In the display 110, an evaluation mark 115 with a letter "Y" drawn therein is given to the program 114. The evaluation mark 115 indicates that the user executes an operation of giving evaluation "LIKE" to the program 114 by using the input section 5. As the user gives the evaluation "LIKE" to the program 114, the content selection device updates the profile to meet the preference of the user, and selects content (program) which is to be recommended according to the updated profile. As a result, the program 114 is selected as recommended content and displayed as a shaded area.

A display 120 shown in FIG. 3B is displayed when the user gives an evaluation "LIKE" to a program 121 while the display 110 is being displayed. In the display 120, an evaluation mark 122 with a letter "Y" drawn therein is given and the program 121, too, is displayed as a shaded area. Also, besides the programs 114 and 121, both of which have been given an evaluation "LIKE" by the user, the rest of three programs 123, 124 and 125, which have not been evaluated by the user, are displayed as shaded areas. The five programs displayed as shaded areas are all contents belonging to a same genre "VARIETY". The content selection device determines that the user is interested in the content that belongs to the variety genre since a plurality of contents of the variety genre have been given the evaluation "LIKE", and therefore, as a result, all the programs of the variety genre (5 programs here) are displayed as recommended content as the shaded area.

A display 130 shown in FIG. 3C is displayed when the user gives an evaluation "DISLIKE" to a program 123 while the display 120 is being displayed. In the display 130, an evaluation mark 131 with a letter "N" drawn therein is given to indicate that the user has given an evaluation "DISLIKE" to the program 123. The content selection device updates the profile so as to indicate; "the user likes the program of variety genre, but dislikes the program that belong to a sub genre of quiz" based on the user evaluation of the program 114, 121 and 123. Here, the programs 123 and 125 each belong to the variety genre, but they also belong to the sub genre quiz. Therefore, when the display 120 changes to the display 130, the shades are removed from the programs 123 and 125. As a result, on the display 130, the programs 114, 121 and 124, all of which belong to variety genre and not to the sub genre of quiz, are displayed as shaded area.

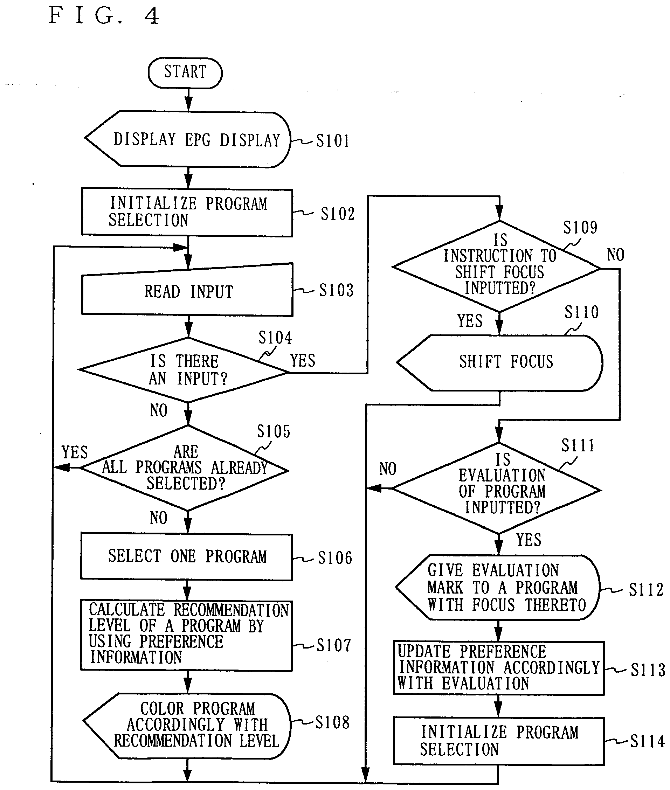

FIG. 4 is a flowchart of a preference learning process of the content selection device according to the first embodiment. In the preference learning process, the following steps are executed.

(Step S101) The content selection device displays an EPG display on the display section 9. In the step, the UI control section 3 outputs to the renderer section 7 renderer information, which instructs to generate the EPG display. The renderer section 7 receives the renderer information, reads content property from the content property management section 4, and generates graphics display information so as to display the EPG. By this, the EPG is displayed on the display section 9.

(Step S102) The content selection device initializes a program selection as part of a preparation process for a process to select all programs one by one. A combination of steps S102, S105 and S106 executes the process to select programs one by one. The initialization of the program selection is executed so as to re-start the program selection from the beginning.

(Step S103) The content selection device reads an input. In the step, the input section 5 outputs operation information, which corresponds to the operation of the user. Note that even when there is no input, the process by the content selection device is to directly advance to the following step (here, to step S104) without standing by.

(Step S104) The process by the content selection device is to advance to step S109 when there is an input in step S103, or to step S105 any other time.

(Step S105) The process by the content selection device is to advance to step S103 when all programs have already been selected in step S106 described below, or to step S106 any other time.

(Step S106) The content selection device selects one program. In the step, the recommendation processing section 2 selects, based on the content property stored in the content property management section 4, one program, which has not been selected, from among all the programs. As the step S106 is executed repeatedly, all programs are selected one by one by a predetermined procedure. In order to execute the process at a high-speed, the content selection device may regard only the program that is displayed in the EPG as a selection target.

(Step 107) The content selection device calculates a recommendation level for the program that is selected in the step S106 based on the preference information, which is stored as profile in the profile management section 6.

(Step S108) The content selection device colors a rectangle area of the EPG, which corresponds to the program selected in the step S106 based on the recommendation level calculated in the step S107. In the step, the following processes can be executed: a process to vary a color given to the rectangle depending on a recommendation level; a process to increase or decrease the proportion to be colored within a rectangle; a process to indicate a numerical value or a graph of a recommendation level; or a process to adjust the coloring of a rectangle which corresponds to a program, whose recommendation level is below a threshold. After the step S108, the process by the content selection device is to advance to step S103.

(Step S109) The process by the content selection device is to advance to step S110 when a focus shift instruction is inputted in the step S103, or to step S111 any other time.

(Step S110) The content selection device shifts the focus which is displayed on the EPG to a direction as instructed. After the step S110, the process by the content selection device is to advance to step S103. In this case, a program, which is to be selected in the step S106, follows a program, which is selected in the step S106 immediately before the process by the content selection device is to advance to step S109. By this, when a process by the content selection device is to advance to step S109, an evaluation process of a program (step S107) and a coloring process on the EPG (step S108) can be continued on from the next program.

(Step S111) The process by the content selection device is to advance to step S112 when an evaluation of a program was inputted in the step S103, or to step S103 any other time.

(Step S112) The content selection device gives an evaluation mark which indicates an evaluation value, which is inputted in the step S111, to a currently focused program. By this, an EPG with evaluation mark is displayed. An evaluation given by the user to a program may take "LIKE", "DISLIKE", both of "LIKE" and "DISLIKE", or another value which is multi-valued. The user can either select one evaluation value from a display, or, input an evaluation of a program by pressing a button corresponding to an evaluation value, on the input section 5.

(Step S113) The content selection device updates, in accordance with the inputted evaluation of the program, the preference information, which is stored as the profile in the profile management section 6.

(Step S114) The content selection device initializes the program selection in the same manner as in the step S102. By this, the program selection process (step S106) is executed again from the beginning. Therefore, the program evaluation process (step S107) and a coloring process on the EPG (steps S108) for all programs are to be executed again.

As described above, with the content selection device according to the present embodiment, the preference of the user can be reflected on the profile in a short period of time by using an EPG. Therefore, the profile learning process, which is, in general, considered to take a few weeks to be completed, can be executed in a short period of time. Further, in general, when a content selection device is shared by a plurality of users, a profile tends to match a preference of a high-frequent user; and thus the content matching a preference of a low-frequent user (who only uses the device on a holiday, for example) are hardly recommended. Contrarily, with the content selection device according to the present embodiment, by inputting an evaluation of a program by using the EPG, a profile is modified in a short period of time, and therefore, the content matching the preference of the low-frequent user can be reflected.

Also, although a calculation process for recommendation level (step S107) and a coloring process on an EPG (step S108) are executed repeatedly until all programs have been selected in the step S105, if there is an input during the repeated process, the process by the content selection device is to advance to the step S109 from the step S104. In this case, a focus shift (step S110) and an update on preference information, which corresponds to an input of a program evaluation, are executed in accordance with the user operation by interrupting the ongoing process. As described above, through the repeated process, the user operation is not put on hold, and therefore, the user does not feel inconvenienced even when the repeated process requires a long time.

For example, even if the user performs a plurality of user operations in a short period of time such as inputting an evaluation of a large number of programs, the user operation will not be put on hold for the calculation process for recommendation level in the step S107. Also, if the user inputs an evaluation of a program in the step S103, an EPG with an evaluation mark is immediately displayed in the step S112. Hence, the user can see the display of the EPG on which the evaluation marks are accumulated, and grasp the volume of the evaluation, which has been inputted, or an evaluation error to be corrected. Also, there is no need to wait for an end of the coloring process on the EPG (step S108) in order to grasp the result of the aforementioned operations. Further, the user can intuitively grasp how much evaluation needs to be inputted, since the user can see and grasp the correlation between the coloring outcome and the evaluation mark on the EPG display.

Also, even when a user operation is executed interrupting the repeated process, the coloring on EPG finishes in the same manner as when the user operation is not executed; the user can simply wait for the coloring on EPG to be finished. The user, therefore, does not need to learn any new operations. As described above, the content selection device according to the present embodiment achieves high usability.

### (Second Embodiment)

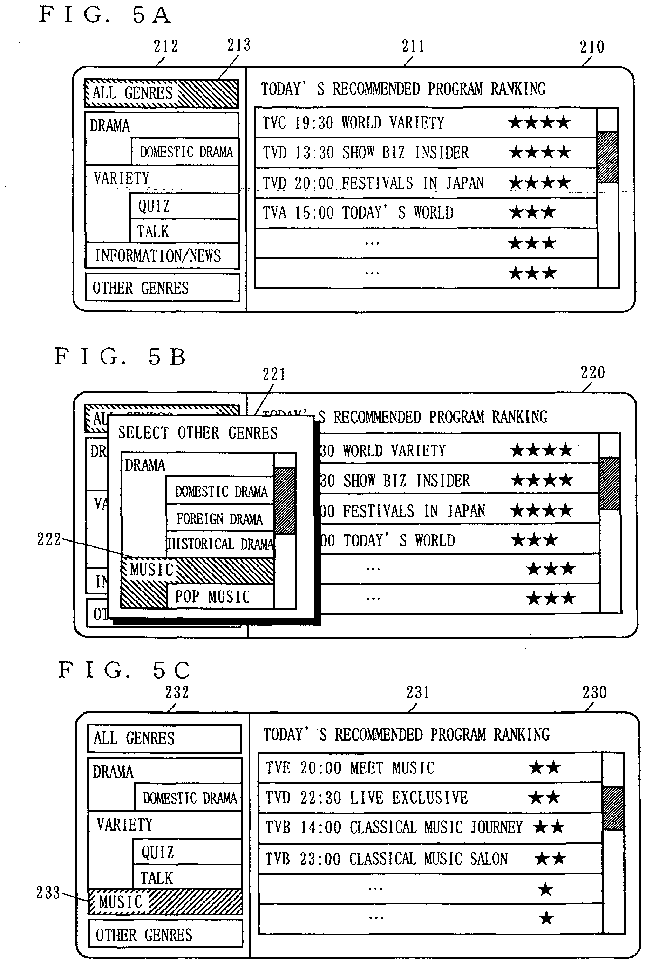

In a second embodiment, a GUI display will be described when the same displays a list of program in an order of recommendation level thereof. FIG. 5A through FIG. 5C are diagrams each showing a GUI display for content selection device according to the second embodiment. A display screen of the content selection device changes from, in the order of, display 210, display 220 and to display 230 as operated by the user. On the left hand side of each of the three displays, there is a display of a menu from which the user selects a genre; and on the right hand side of the displays, there is a display of a list of programs which are to be recommended.

The display 210 shown in FIG. 5A is an initial display, which shows the list of programs selected from among all the programs of all genres in the order of recommendation level from high to low. The display 210 includes a program display domain 211 and a menu display domain 212. In the program display domain 211, the list of program which is to be recommended is displayed. Each row displayed in the program display domain 211 corresponds to one program. In each row, a broadcast channel, date and time of when the broadcast starts, a program name and a recommendation level (the more star marks are given on a program, the higher the recommendation level of the program is) are displayed. Note that the display format of the program display domain 211 does not necessarily need to be a tabular format, but may be a list format or an icon format.

In the menu display domain 212, a menu is displayed for the user to select a group of programs, which are to be an object for recommendation level calculation. Also, in the menu display domain 212, a focus is shown to indicate a currently selected item. In FIG. 5A through FIG. 5C, a focus is indicated by shading an item. By shifting the focus up or down over the menu, the user selects a genre, which is to be a target for recommendation. In FIG. 5A, in order to select all programs of all genres as a target for recommendation, an item 213, which indicates "ALL GENRES", is given the focus. Also, in order to display the program display domain at the maximum size, the menu display domain 212 is not normally displayed; it can be set so that the menu display domain is displayed only when the user performs a predetermined operation.

In the menu display domain 212 the followings are displayed: (1) an item "ALL GENRES" to select all genres; (2) a plurality of items from which to specify a genre; and (3) an item "OTHER GENRES" to select from a list of all genres a genre which cannot be selected from the aforementioned item (2). Each of the aforementioned items (2) is displayed in a nest of table to match the layered structure which a genre has. On the display 210, for example, below a "VARIETY" genre, sub genres "QUIZ" and "TALK SHOW" are displayed to show that such sub genres exist. In this case, by shifting a focus up or down over the nest of table, the user can freely select the genre "VARIETY", or one of the sub genres "QUIZ" or "TALK SHOW".

Also, as an item (2), instead of all genres, only a genre that is determined highly necessary is to be displayed with priority. For example, although there are "FOREIGN DRAMA" and "HISTORICAL DRAMA" besides "DOMESTIC DRAMA" for a sub genre under "DRAMA", "FOREIGN DRAMA" and "HISTORICAL DRAMA" are determined relatively low on necessity, and therefore those sub genres are not displayed on the menu display domain 212. For the same reason, although there is a genre "MUSIC", the genre is not displayed in the menu display domain 212.

As for a criterion, which measures the necessity for a genre to be displayed on the menu display domain, the preference information of the user, which is stored in the profile storing section 6, or program recommendation information, which is acquired through broadcast or transmission can be used as the profile. An audience rating can also be used as the program recommendation information. Also, it can be determined that if a genre contains more programs than a predetermined value, then it is to be so displayed on the menu display domain.

The display 220 shown in FIG. 5B is displayed when the item "OTHER GENRES" is chosen so as to make a selection from among the list of all genres on a menu while the display 210 is being displayed. In the display 220, a pop-up window 221 is displayed, in which all genres are displayed in layered structure. By this, the user can specify a desired genre from all genres.

The display 230 shown in FIG. 5C is displayed when the user selects an item 222 which indicates "MUSIC" from the pop-up window 221 while the display 220 is being displayed. In the program display domain 231 on the display 230, programs which belong to the "MUSIC" genre are displayed in the order of recommendation level from high to low. A genre which is explicitly selected by the user is determined necessary for a display on the menu display domain. Therefore, an item 233 which indicates the genre "MUSIC", which is selected in the display 220, is displayed on the menu display domain 232 on the display 230. As described above, since a genre selected by the user is to be added when the menu is displayed next time, the user can simply select the genre "MUSIC" in the next operation without using the pop-up window 221.

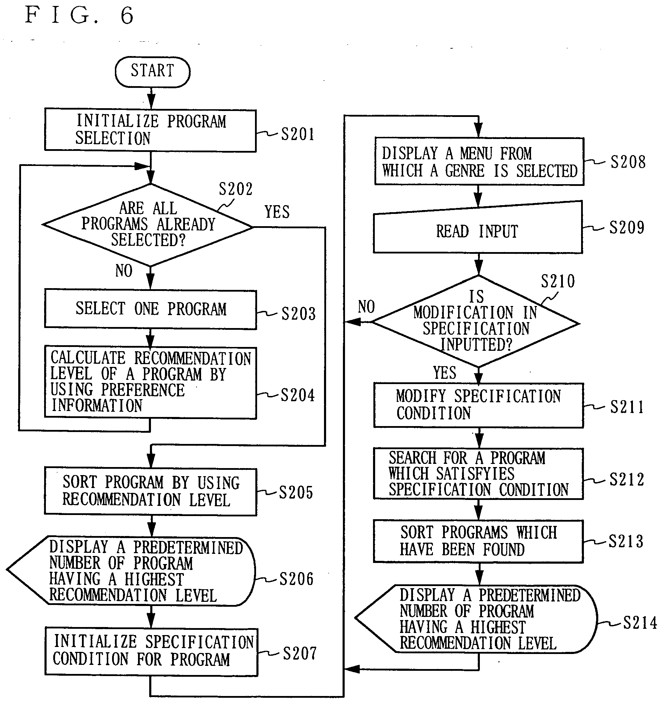

FIG. 6 is a flowchart of a recommendation rank narrowing process for the content selection device according to the second embodiment. In the recommendation rank narrowing process, the following steps are executed.

(Step S201) The content selection device initializes a program selection in the same manner as in the step S102 in FIG. 4.

(Step S202) The process by the content selection device is to advance to step S205 when all programs are already selected by step S203 described below, or to step S203 any other time.

(Step S203) The content selection device selects one program in the same manner as in the step S106.

(Step S204) The content selection device calculates a recommendation level for a program by using preference information in the same manner as in the step S107.

(Step S205) The content selection device sorts a program by the recommendation level.

(Step S206) The content selection device displays a predetermined number of program having highest recommendation level on a screen.

(Step S207) The content selection device initializes the specification condition for a program. For example, the specification condition at the initialized status is set as "NO SPECIFICATION". When step S212, described below, is executed under this circumstance, a search is executed with all program as a search object.

(Step S208) The content selection device displays a menu for a user to select a genre therefrom. In the menu, along with a genre which is determined highly necessary for the display, items such as "ALL GENRES" and "OTHER GENRES" are displayed. Here, it is determined that the better the match is between a genre and a profile of a user, the higher the necessity it is for a genre to be displayed. Also, the content selection device can determine, based on a value, which is acquired from communication or the like to indicate the necessity of each genre, whether or not a genre is necessary for a display.

(Step S209) The content selection device reads an input in the same manner as in the step S103.

(Step S210) The process by the content selection device is to advance to step S211 when a modification in the specification condition is inputted in the step S209, or to step S208 any other time.

(Step S211) The content selection device modifies the specification condition in accordance with the input executed in the step S209. When a specific genre is selected explicitly in the step S209, the content selection device updates the profile such that the selected genre matches the preference of the user. Due to this modification in the profile, the necessity of the explicitly selected genre is increased; and as a result, next time a menu is displayed in the step S208, the selected genre will be displayed as an addition to the menu. Also, the content selection device can memorize the most recent explicitly selected genre, and add the memorized genre to a menu for a display in the step S208.

(Step S212) The content selection device finds a program that satisfies the specification condition modified in the step S211.

(Step S213) The content selection device re-sorts the program, which is found in the step S212, by using the recommendation level.

(Step S214) The content selection device displays on the screen a predetermined number of programs having highest recommendation level. After the step S214, the process by the content selection device is to advance to the step S208.

As described above, with the content selection device according to the present embodiment, the user can specify a program which is to be the target of recommendation just by selecting an item which is being displayed in the menu. Also, since a genre matching the profile is displayed on the screen with priority, a genre which the user desires to select is, in many cases, displayed on the screen as one of the few items. The user can, therefore, select the genre easily. Further, a genre, which is not included in the profile since a program which belongs to the genre has not been viewed by the user, can be added to the menu if the genre is selected once from the list of all genres. As described above, the content selection device according to the present embodiment achieves high operability.

Also, in the aforementioned example, a program is specified by using a genre, however, other content properties (e.g., cast, broadcast station, first episode or not, final episode or not, re-run or not, time and day of a week of broadcast, etc) may be used to specify the program. Also, although in the present embodiment, a television program is used in order to describe as an example for content, a homepage or a streaming video on a communication network may be the object of the search in stead.

### (Third Embodiment)

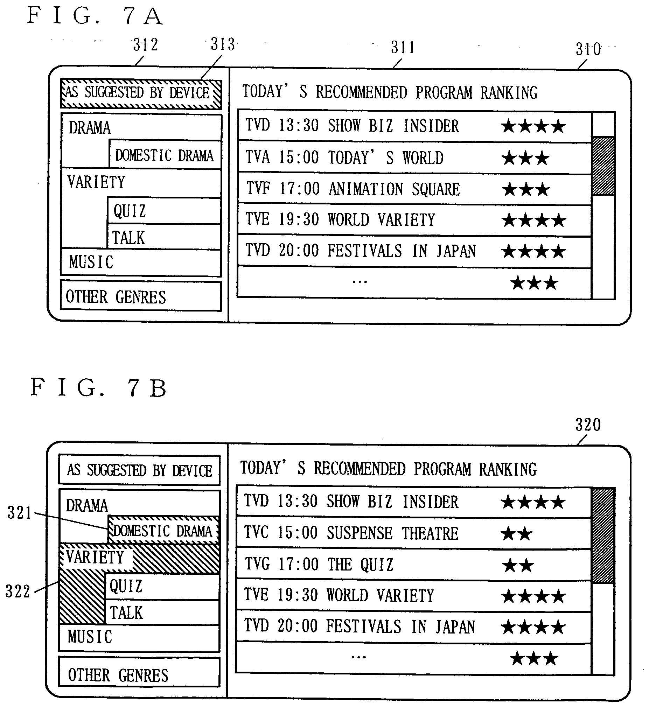

In a third embodiment, a GUI display will be described when the same displays a viewing course which is to be recommended to the user. Here, a viewing course means to a plurality of programs arranged in a time sequence. The user can learn a sequence by which the content can be viewed. That is, the user can learn at what time and to what channel a channel selection should be made based on the viewing course recommendation which is made by the content selection device. FIG. 7A and FIG. 7B are diagrams each showing a GUI display for the content selection device according to the third embodiment. The display screen of the content selection device changes, in response to the user operation, from display 310 to display 320. On the left hand side of each of the two displays, there is a menu being displayed for the user to select a genre of a program; on the right hand side of the displays, there is a display of a viewing course which is to be recommended to the user.

The display 310 shown in FIG. 7A is an initial display, which is displayed when a program included in a viewing course is selected from all programs regardless of genres. The display 310 includes a viewing course display domain 311 and a menu display domain 312. In the viewing course display domain 311, a recommended viewing course in which a plurality of programs which are to be recommended are arranged in a time sequence, is displayed. Each row contained in the recommended viewing course corresponds to one program. A display format of each row is the same as that in the second embodiment.

In the menu display domain 312, a menu is displayed for the user to select a genre for a program, which is to be included in the viewing course to be recommended. The display format of the menu is the same as that in the second embodiment. At the initial status, a focus in the menu display domain 312 is given to an item 313 which indicates "AS SUGGESTED BY DEVICE". When the focus is given to this position, one or a plurality of genres matching the preference of the user is selected based on profile, and a program which is to be included in a viewing course is selected from the programs that belong to a selected genre. In a lower part of the menu display domain 312, some genres are displayed together with a layered structure. In the part, the genres that are determined highly necessary for the display based on the profile, not all genres, are displayed with priority.

The display 320 shown in FIG. 7B is displayed when the user selects a specific genre while the display 310 is being displayed. To be more specific, the display 320 is displayed when the user simultaneously selects an item 321, which indicates a sub genre "DOMESTIC DRAMA", and an item 322, which indicates a genre "VARIETY", on the menu display domain. When a plurality of genres (including sub genres) are selected simultaneously, a program, which is to be included in a recommended viewing course, is selected from the plurality of the selected genres. The user operates the input section 5 to shift a focus to one genre, and presses the Enter button of the input section 5 to change the genre to a selected mode or to a non-selected mode within the menu display domain.

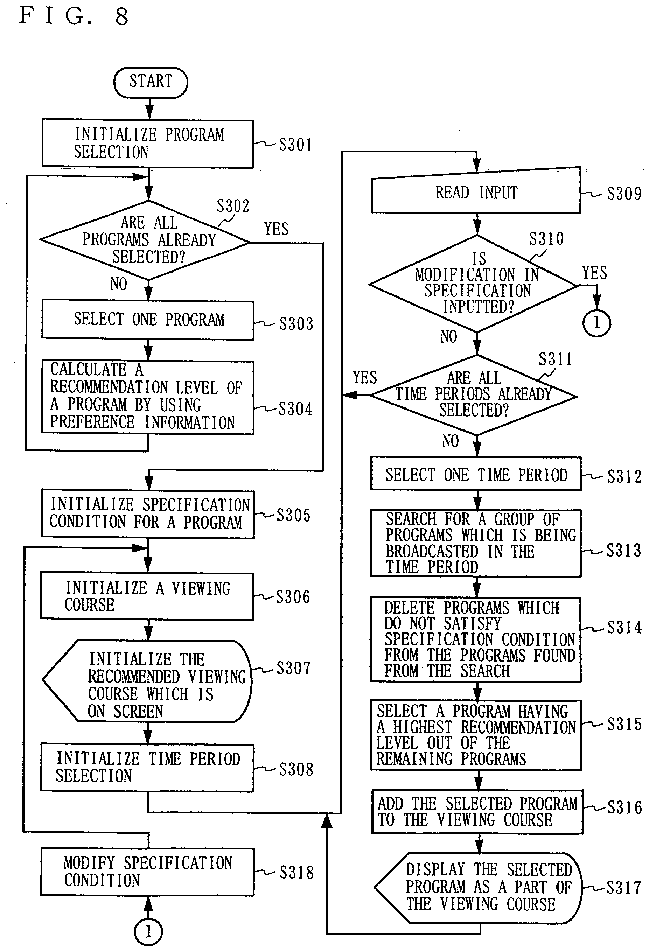

FIG. 8 is a flowchart of a viewing course generation process of the content selection device according to the third embodiment of the present invention. In the viewing course generation process, the following steps are executed.

(Step S301) The content selection device initializes a program selection in the same manner as in the step S102.

(Step S302) The process by the content selection device is to advance to step S305 in the same manner as in the step S105 when all programs are already selected in step S303 described below, or to step S303 any other time.

(Step S303) The content selection device selects one program in the same manner as in the step S106.

(Step S304) The content selection device calculates a recommendation level of a program by using preference information in the same manner as in the step S107.

(Step S305) The content selection device initializes a specification condition in the same manner as in the step S207.

(Step S306) The content selection device initializes a viewing course. To be specific, the content selection device deletes the data for the viewing course.

(Step S307) The content selection device initializes the recommended viewing course on a display. To be specific, the content selection device erases the viewing course, which is being displayed on the screen.

(Step S308) The content selection device initializes a selection of a time period. The time period is selected by, in the order of, steps S308, S311 and S312. The selection of the time period is executed, for example, in a unit of one-minute. The time period begins with the current time and date, and ends with the last time and date stored in EPG data, which is stored as content property. For example, if a seven-day worth of EPG data is stored, for example, the selection of the time period is executed 10080 times (which equals 60 minutes multiplied by 24 hours multiplied by 7 days).

(Step S309) The content selection device reads an input in the same manner as in the step S103.

(Step S310) The process by the content selection device is to advance to step S318 in the same manner as in the step S210 when a modification in a specification condition is inputted in the step S309, or to step S309 any other time. Here, a modification in a specification condition means, as described with reference to FIG. 7A and FIG. 7B, to modify, for example, a genre selection, which is displayed in the menu display domain.

(Step S311) The process by the content selection device is to advance to step S309 when all time periods are already selected in step S312 described below, or to step S312 any other time. Therefore, the process by the content selection device is, for example, to go back to the step S309 until the end point, which is described in the step S308, and to stand by for an input in the step S309.

(Step S312) The content selection device selects one time period. Each time the content selection device executes the step S312, a period of, for example, one-minute is selected so as to advance by a minute from the current time which is a starting point.

(Step S313) The content selection device finds a group of programs that are broadcasted in the time period, which is selected in the step S312.

(Step S314) The content selection device deletes, from among the programs that are found in the step S313, a program which does not satisfy the specification condition.

(Step S315) The content selection device selects a program having highest recommendation level from among the programs that remain.

(Step S316) The content selection device adds the selected program to the viewing course.

(Step S317) The content selection device displays the selected programs as the viewing course which is to be recommended on the screen. After the step S317, the process by the content selection device is to advance to the step S309.

(Step S318) The content selection device modifies the specification condition. After the step S318, the process by the content selection device is to advance to the step S306.

When the specification condition is modified in the step S318, the processes of the step S306 and thereafter are executed in order to re-generated the viewing course which is to be recommended. The modification in the specification condition is executed immediately by interrupting an ongoing process of generating a viewing course (steps S312 through S317). Therefore, even if the process of generating a viewing course takes a long time, the user can modify specification condition continuously without having to wait for the completion of the generation process. As described above, the content selection device according to the present embodiment achieves high usability.

In the present embodiment, a process of offering a viewing course to the user is described. The content selection device can, after the offering process, execute a process in which a channel selection is changed automatically based on the generated viewing course, or a process in which a display appears to indicate that a program included in the viewing course has started. Also, it is described that the content selection device finds a program having highest recommendation level in a given one-minute time period independently, but instead, the device can be set so that, once a program starts, the channel selection is not changed until the program ends or until the difference of the recommendation level exceeds a predetermined threshold. Such process can be easily realized by, for example, adding the aforementioned threshold to the recommendation level of a previously selected program in step S315.

### (Fourth Embodiment)

In a fourth embodiment, a GUI display will be described when the same finds content that is similar to content (hereinafter referred to as focus content) to which the user has been paying attention, with a starting point of the search being the focus content. Here, a focus program means a program, which is currently being displayed, or a program having a focus given thereto.

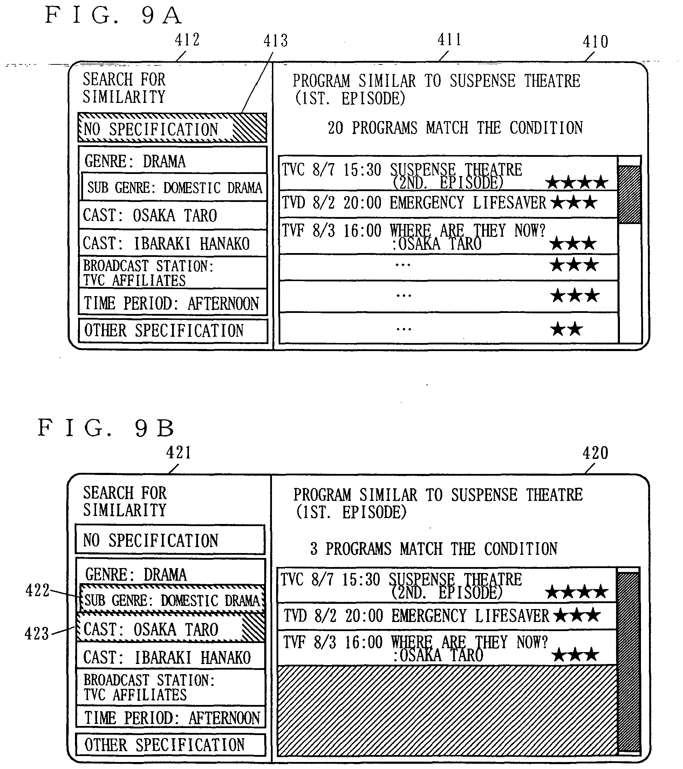

FIG. 9 is a diagram showing a GUI display for the content selection device according to the fourth embodiment. A display 410 shown in FIG. 9A is an initial display prior to an execution of a search for a program that is similar to focus content. The display 410 includes a program display domain 411 and a menu display domain 412. In the program display domain 411, a list of programs similar to the focus content, which is found by a search, is displayed. Each row that is displayed in the program display domain 411 corresponds to one program which is similar to the focus content. The display format of each row is the same as that in the second embodiment. In the program display domain 411, the programs similar to focus content are displayed in the order of recommendation level from high to low. Also, in the program display domain 411, the title of the focus program, which is the starting point of the search, is displayed.

In the menu display domain 412, a menu for the user to specify the search condition for a program, which is similar to focus content, is displayed. In the menu display domain 412, the followings are displayed as an option for the user to specify a point of similarity: (1) an item "NO SPECIFICATION" when the user chooses not to give any specification; (2) a plurality of items from which the user selects a specific content property; and (3) an item "OTHER SPECIFICATION" for the user to select the content property that was not available in the aforementioned items from (2). Also, in the menu display domain 412, a focus 413 is displayed in the same manner as in the second embodiment.

The aforementioned item "NO SPECIFICATION" from (1) is selected by default. When the item is pre-selected, the content selection device automatically selects a search condition, which is determined as most appropriate based on the user profile.

In the aforementioned items from (2), a plurality of content properties of a focus program, which is the starting point of a search, are included so as to offer an option to define the search condition for a program, which is similar to the focus content. In each of the items, a property name and a property value of each content property are displayed. When the user selects one or a plurality of items from the aforementioned items from (2), the content selection device finds, with the selected items as key information, a program which is similar to the focus content. One program has a plurality of content properties such as genre, cast, key word, re-run or not, new program or not, and broadcasting channel. Also, there are cases where one content property has a plurality of property values. For example, a property value of the content property "CAST" includes a plurality of persons. The content selection device, therefore, selects an item which matches the preference of the user based on the user profile, and displays the selected item with priority on the menu display domain 412.

Suppose, as shown in FIG. 9A, that a focus program, which is the starting point of a search, belongs to "DRAMA" genre, and has the cast that includes "OSAKA TARO", "IBARAKI HANAKO" and "NIHON TARO". Since it is determined, based on a profile, that the user is interested in "DRAMA", an item which indicates "GENRE: DRAMA" is displayed in the menu display domain 412. On the other hand, since it is determined, based on the profile, that the user is interested in "OSAKA TARO" and "IBARAKI HANAKO" for the cast, but not interested in "NIHON TARO", an item which indicates "CAST: OSAKA TARO" and an item which indicates "CAST: IBARAKI HANAKO" are displayed in the menu display domain 412, but not the item which indicates "CAST: NIHON TARO".

The aforementioned item "OTHER SPECIFICATION" from the (3) is used for a user to select a content property, which cannot be selected from the aforementioned item (2), from a list of all content properties of a focus program in the same manner as in the item "OTHER GENRES" according to the second embodiment for selecting. The content selection device can display the item selected from the list of all content properties along with the items for (2) from the next time and thereafter.

A display 420 shown in FIG. 9B is displayed when the user specifies a point of similarity in order to define a search condition. When the user selects a plurality of items to define the search condition, the content selection device executes a search by using "OR" or "AND" with the items, or the device can display a program similar to focus content in an order of the number of the items that match therebetween from high to low. In the menu display domain 421, which is contained in the display 420, an item 422 which indicates "SUB GENRE: DOMESTIC DRAMA" and an item 423 which indicates "CAST: OSAKA TARO" are selected simultaneously. The content selection device finds a program, which either belongs to the sub genre of domestic drama, or has Osaka Taro in the cast.

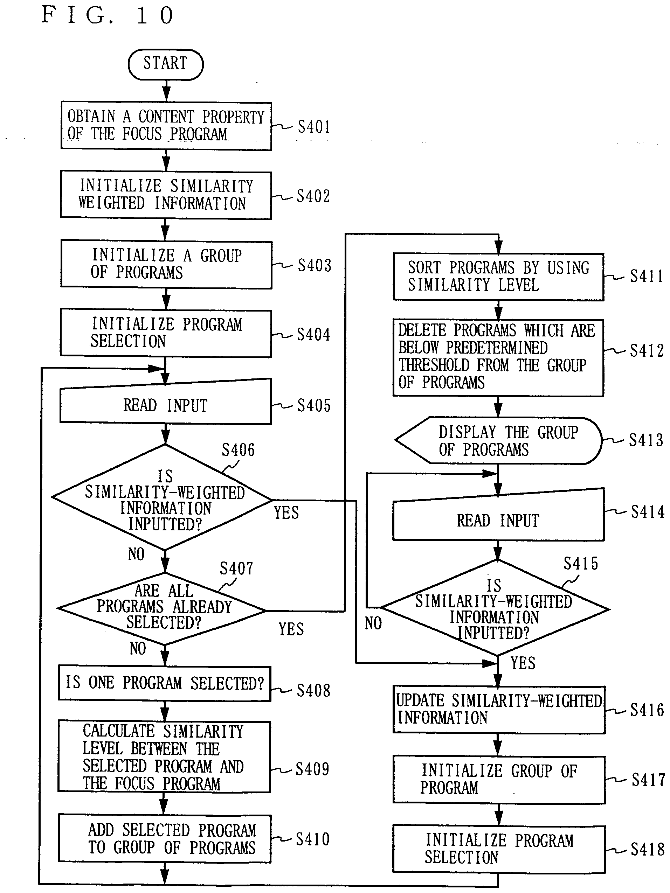

FIG. 10 is a flowchart of a search process for a program similar to focus content as executed by the content selection device according to the fourth embodiment. In the search process for a program similar to focus content, the following steps are executed:
(Step S401) The content selection device finds the content property of a focus program. A program currently being displayed, or a program, whose detail is currently being displayed in the EPG, is regarded as focus program. The focus program is the starting point of a search for a program which is similar to the focus program. In the step, the UI control section 3 outputs to the recommendation processing section 2 the information, which specifies a focus program as recommendation control information. The recommendation processing section 2 reads content property, which is specified by the recommendation control information, of a program from the content property management section 4.
(Step S402) The content selection device initializes similarity-weighted information. Here, the similarity-weighted information will be described. The content selection device generates a search condition formula which corresponds to a content property value of the program, which is to be the starting point of a search. When the genre of the program which is to be the starting point of the search is, for example, drama, a condition formula "GENRE: DRAMA" is generated. For the plurality of condition formulas, which are generated as described above, the similarity-weighted information indicates, by weighing each condition formula, how to calculate the similarity level for each program among the search target. Since one program has a plurality of content properties, there is a plurality of condition formulas corresponding to the program which is to be the starting point of a search. Therefore, among the plurality of condition formulas, their goodness of match with the profile is evaluated so as to determine which condition formula is a better match with the preference of the user. By using the similarity-weighted information, which gives a great deal of weight to the condition formula which matches the preference of the user, to calculate the level of similarity of each program with the focus content, the program matching the preference of the user more appropriately will be searched for with priority.
   In the step S402, the recommendation processing section 2 generates a condition formula for each of the content property which is found in the step S401, and finds the similarity-weighted information to define how each condition formula is weighted according to the goodness of match with the content property, which is stored in the profile management section 6.
(Step S403) The content selection device initializes the group of programs of the search result. To be more specific, the content selection device deletes the group of programs. This process is executed by the recommendation processing section 2.
(Step S404) The content selection device initializes a program selection in the same manner as in the step S102.
(Step S405) The content selection device reads an input in the same manner as in the step S103.
(Step S406) The process by the content selection device is to advance to step S416 when the similarity-weighted information is inputted in the step S405, or to step S407 any other time. The input of the similarity-weighted information is executed as described in FIG. 9A and FIG. 9B when an item is selected from a menu. In the step S406, the UI control section 3, based on the operation information outputted by the input section 5, executes a state transition.
(Step S407) The process by the content selection device is to advance to step S411 when all programs are already selected in step S408 described below, or to step S408 any other time.
(Step S408) The content selection device selects one program in the same manner as in the step S106.
(Step S409) The content selection device calculates the similarity level between the program selected in the step S408 and a focus program. The similarity level is calculated by: finding the goodness of match between a program (selected in the step S408), which is the calculation object for the similarity level, and each condition formula generated in the step S402; and then weighing and incorporating the goodness of match to the program according to the similarity-weighted information. In the step S409, the recommendation processing section 2 reads the content property of the program, which is the object of similarity level calculation, from the content property management section 4, and executes the above calculation.
(Step S410) The content selection device incorporates the program, which is selected in the step S408, and the similarity level, which is found in the step S410, to the group of programs. The process is executed by the recommendation process section 2. After the step S410, the process by the content selection device is to advance to the step S405. As described above, by repeatedly executing the processes from the steps S405 through S410, a similarity level for all programs are calculated. Once the calculation is completed, the process by the content selection device is to advance to step S411.
(Step S411) The content selection device sorts the programs by the similarity level a program, which is included in the group of programs. The process is also executed by the recommendation processing section 2.
(Step S412) The content selection device deletes from the group of programs the program whose similarity level is below a predetermined threshold. The process is also executed by the recommendation processing section 2.
(Step S413) The content selection device displays the group of programs, which is found by the processes thus far. In the step, the recommendation processing section 2 outputs the group of programs, which is found in the step S412, as recommendation information. The UI control section 3 receives the recommendation information, and converts a list, which is contained in the recommendation information, of programs similar to focus program into renderer information. The renderer section 7 converts the renderer information into graphics information. As a result, the display section 9 displays the list of programs similar to focus program on the screen.
(Step S414) The content selection device reads an input in the same manner as in the step S103.
(Step S415) The process by the content selection device is to advance, in the same manner as in the S406, to step S416 when the similarity-weighted information is inputted in the step S414, or to step S414 any other time.
(Step S416) The content selection device updates the similarity-weighted information in accordance with the input inputted in the step S414. In the step, a predetermined value will be added to the weigh of priority contained in the similarity-weighted information corresponding to one or a plurality of condition formulas, which correspond to the item inputted in the step S414.
(Step S417) The content selection device initializes the group of programs of the search result in the same manner as in the step S403.
(Step S418) The content selection device initializes a program selection in the same manner as in the step S404. After the step S418, the process by the content selection device is to advance to the step S405.

When the process of the content selection device advances from the step S406 to the step S416, the initialization of the group of program (step S417) and the initialization of the program selection (step S418) are executed immediately. By this, when the process of the content selection device returns to a repeated process between the steps S405 through S410, the similarity level for all programs are re-calculated.

Also, when the user performs an operation to modify the similarity-weighted information during the repeated process between the steps S405 through S410, the control of the content selection device is to advance to the step S414 from the step S406 so as to immediately update the similarity-weighted information. Therefore, even if the calculation of the similarity level takes a long time, the procedure, which is executed when an operation to select a condition formula from a menu is executed, is executed at any time by interrupting the similarity calculation process without having to wait for the end of the process. Also, when the aforementioned process is executed by interrupting an on-going operation, the user can simply wait in order to find a list of programs, which is similar to focus program without executing any special operation. The user, therefore, does not need to memorize any special operation such as pressing a button to re-calculate a similarity level just when the calculation is interrupted.

As described above, with the content selection device according to the present embodiment, the user can view a program and, after determining that the program matches the preference of the user, search for a program similar to the viewed program with it being the starting point of a search. Therefore, the user is not required to go through a whole process of inputting a search formula to search for content, or have any knowledge on content property. Further, by simply selecting condition formulas from the menu, the user can search for a program similar to a focus program appropriately. Also, since an item, which is displayed in the menu, is generated based on the preference of the user, an item the user wishes to select is being displayed, in most cases, as one of the few selection options. The user can, therefore, select an item easily. As described above, the content selection device according to the present embodiment achieves high usability.

### (Fifth Embodiment)

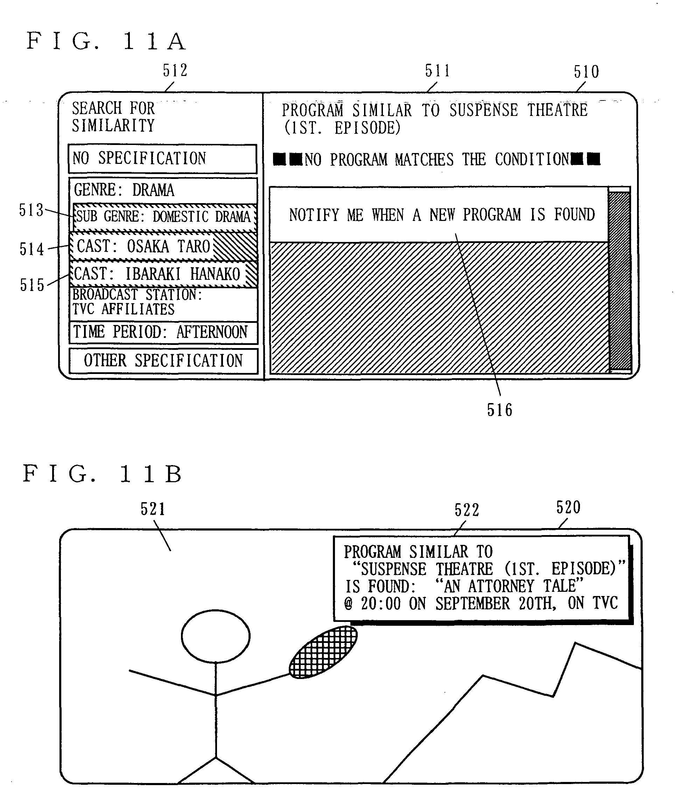

In a fifth embodiment, a GUI display will be described when the same is given a condition to search for content with, and there is no content satisfying the condition. FIG. 11A and FIG. 11B are diagrams each showing a GUI display for a content selection device according to the fifth embodiment. A display 510 shown in FIG. 11A includes, as in the fourth embodiment, a similar program display domain 511 to show a list of programs similar to a focus program as a search result, and a menu display domain 512 to show a menu for specifying a search condition. Here, when the user selects a plurality of items simultaneously, the content selection device finds a program, which is similar to the focus program, by tying the selected items with "AND". In the display 510, three items (items 513 through 515) are selected. The content selection device finds a program whose sub genre is "DOMESTIC DRAMA", and whose cast includes "OSAKA TARO" and "IBARAKI HANAKO". In the similar program display domain 511 of the display 510, a list of programs similar to the focus program is normally displayed as a search result.

However, suppose here that the search result is empty, namely, there is no program to satisfy the aforementioned condition. In this case, in the similar program display domain 511 a message box 516 is displayed. The message box 516 is set to correspond to a button for executing a setting "NOTIFY ME WHEN A PROGRAM IS FOUND". The user can, by shifting a focus on the screen to the message box 516 and pressing the Enter button on the input section 5, press a button corresponding to the message box 516. Once the button is pressed, the content selection device continues to search for a program satisfying the specified condition from among a plurality of programs which are to be available hereafter. A process, which continues to search for a program as described above, is referred to as "CONTINUOUS SEARCH", hereinafter.

A display 520 shown in FIG. 11B is displayed when the search for a program is successful in the future (that is, a program satisfying the condition is found). In the display 520, a pop-up window 522 is overlayed superimposing on a program image 521 of a television program. In the pop-up window 522, a message which indicates that the program satisfying the condition has been found, a title of the program, which is the starting point of the search, and the information to specify the program that is found (here, broadcast channel, time and date, and the title) are displayed.

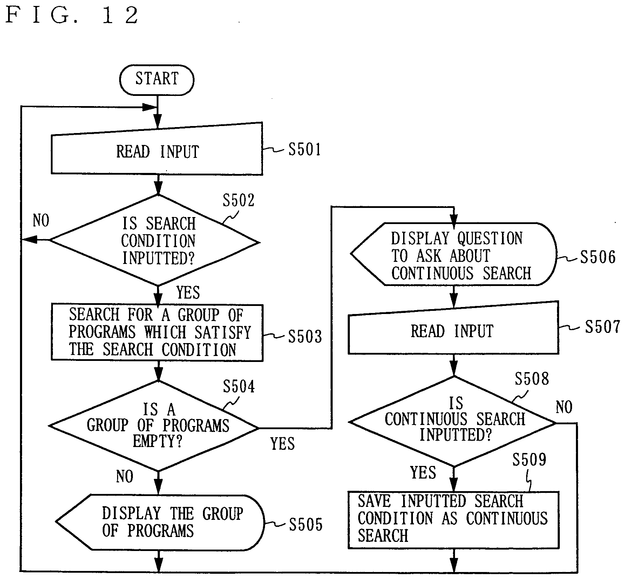

FIG. 12 is a flowchart of a continuous search setting process for the content selection device according to the fifth embodiment. In the continuous search setting process, the following steps are executed.

(Step S501) The content selection device reads an input in the same manner as in the step S103

(Step S502) The process by the content selection device is to advance to step S503 when a search condition is inputted, or to step S501 any other time. Here, the input of a search condition can be an operation to select a search condition formula from a menu, which is displayed in the menu display domain, or an operation in which a search condition formula is directly inputted. In the step S 502, the UI control section executes a state transition.

(Step S503) The content selection device updates the search condition by using the search condition inputted in the step S501, and finds a group of program satisfying the updated search condition. In the step, the UI control section 3 outputs recommendation control information, which instructs to update the search condition. The recommendation processing section 2 updates the search condition based on the recommendation control information. Then, the recommendation processing section 2 searches content property management section 4 for a program, which satisfies the search condition, and outputs the group of programs of the search result as recommendation information to the UI control section 3.

(Step S504) The process by the content selection devoice is to advance to step S506 when the group of program found in the step S503 is empty, or to step S505 any other time. In the step S504, the UI control section 3 executes a state transition.

(Step S505) The content selection device displays the group of program in the same manner as in the step S413.

(Step S506) The content selection device displays a question to the user asking whether or not a continuous search is to be executed. In the step, the UI control section 3 performs a state transition. The process by the content selection device advances to step S506 when, as a result of the search executed in the s503, there is no program satisfying the search condition (that is, when the group of programs of the search result is empty) . In such case, the question of whether or not to perform the continuous search is automatically displayed on the screen. The user can, therefore, use the content search function by answering the question, which is displayed to the user, even if the user does not know a means to access the continuous search function.

(Step S507) The content selection device reads an input in the same manner as in the step S103.

(Step S508) The process by the content selection device is to advance to step S509 when the continuous search is inputted in the step S507, or to step S501 any other time. In the step S508, the UI control section 3 executes a state transition.

(Step S509) The content selection device saves the search condition inputted in the step S507 as a continuous search condition. In the step, the UI control section 3 outputs to the recommendation processing section 2 recommendation control information which instructs to begin the continuous search. After the step S509, the process by the content selection device is to advance to the step S501.

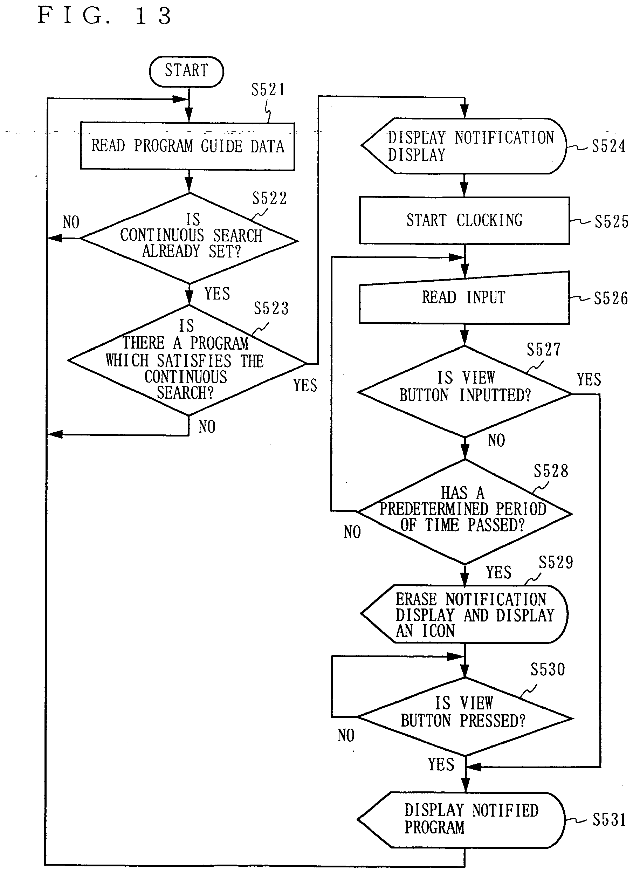

Next, a process to stand by until a program satisfying the continuous condition becomes available, and to notify the user when such program are available will be described. FIG. 13 is a flowchart of the continuous search process for the content selection device according to the fifth embodiment. In the continuous search process, the following steps are executed.

(Step S521) The content selection device reads program guide data. In the step, the recommendation processing section 2 reads content property from the content property management section 4.

(Step S522) The process by the content selection device is to advance to step S523 when a continuous search condition is already set, or to the step S521 any other time. The continuous search condition is set in the step S509 as shown in FIG. 12.

(Step S523) The process by the content selection device is to advance to step S524 when there is a program satisfying the continuous search condition in the program data, which is read in the step S521, or to the step S521 any other time.

(Step S524) The content selection device displays a notification display. As the notification display, a pop-up window 522 shown in FIG. 11B, for example, is displayed. At this point, when an icon which is displayed in step S529, described below, is being displayed, the content selection device may erase the icon by overwriting the notification display thereover.

(Step S525) The content selection device starts clocking. In the step, the current time, for example, is memorized.

(Step S526) The content selection device reads an input in the same manner as in the step S103.

(Step S527) The process by the content selection device is to advance to step S531 when a view button is pressed in the step S526, or to step S528 any other time.

(Step S528) The process by the content selection device is to advance to step S529 when a predetermined time period has passed, or to step S526 any other time. To be more specific, the content selection device, by calculating the difference between, for example, the time previously memorized in the step S525 and the current time as of when the step S528 is being executed, finds an elapse time between the steps S525 and S528 in order to determine whether the elapse time exceeds a predetermined time period (e.g., 15 sec.) . The process by the content selection device is to stand by in the loop from the steps S521 to S527 when the predetermined time period has passed or until the view button is pressed in the step S527.

(Step S529) The content selection device erases the notification display and displays an icon on the screen. The icon indicates that, since a view button is not pressed, the previously displayed notification display has been erased due to timeout. Since the icon occupies a small area on the screen compared with the notification display, the icon will hardly be a distraction to the screen display even if it is displayed for an extended period of time. The content selection device may automatically erase the icon from the screen when a predetermined time period has passed in the same manner as the notification display is erased. The erasing of the icon can be executed: after a predetermined period of time, which is longer than that for the notification display (e.g., 5 minutes) ; when the broadcast of a program of the search result ends; or when another program is searched for.

(Step S530) The process by the content selection device is to stand by in the step S530 until a view button is pressed, and to step S531 when the view button is pressed.

(Step S531) The content selection device displays a notified program on the screen. After the user views the program, the process by the content selection device is to advance to step S521.

As described above, the content selection device according to the present embodiment can, even in the case where there is no content satisfying a search condition, notify the user about recommend content when such content is found in the future.

### (Sixth Embodiment)

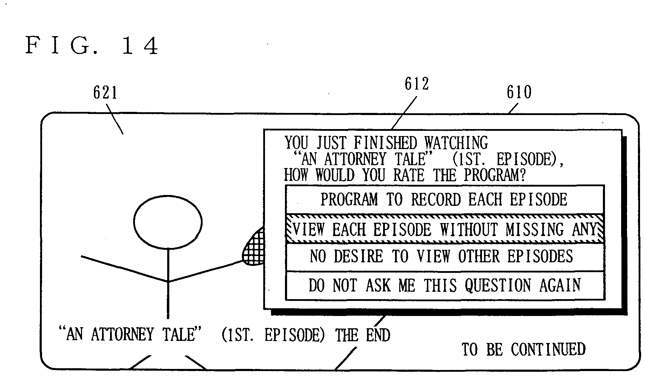

In a sixth embodiment, a GUI display for allowing the user to input an evaluation of a program effectively with a small burden on the side of the user will be described. FIG. 14 is a diagram showing a GUI display for a content selection device according to the sixth embodiment. A display 610 shown in FIG. 14 is displayed when the user inputs an evaluation of a program. In the display 610, a pop-up window 612 is displayed superimposing on a program image 611 based on a television broadcast to encourage the user to give an evaluation on the program.

The content selection device displays, when the user views a series program such as a drama for a first time, the pop-up window 612 at a timing in which the program ends. Also, in the pop-up window 612, the following options regarding the episodes to follow for the program are displayed for the user to choose from: (1) program to record each episode; (2) view each episode without missing any; (3) no desire to view other episodes; (4) do not display the pop-up window 612 (because the display of the pop-up window 612 itself is annoying). When the aforementioned (2) is selected, the content selection device executes a process to automatically display the program image on the screen when a following episode of the same series program starts, a process to let the user know that the program starts by using the pop-up window 522 as shown in FIG. 11, or a process to automatically record the program when the display is not being displayed.

The content selection device does not force the user to give an evaluation of a program each time a program ends. Also, since an evaluation is given after the user views a series program for a first time, more appropriate evaluation on the program is given compared with when the user is to give an evaluation before viewing the series program. Note that for the user to view a series program for a first time includes not only when the user views the first episode of a series, but also when the user misses the first episode of the series and views the second episode of the same series for the first time.

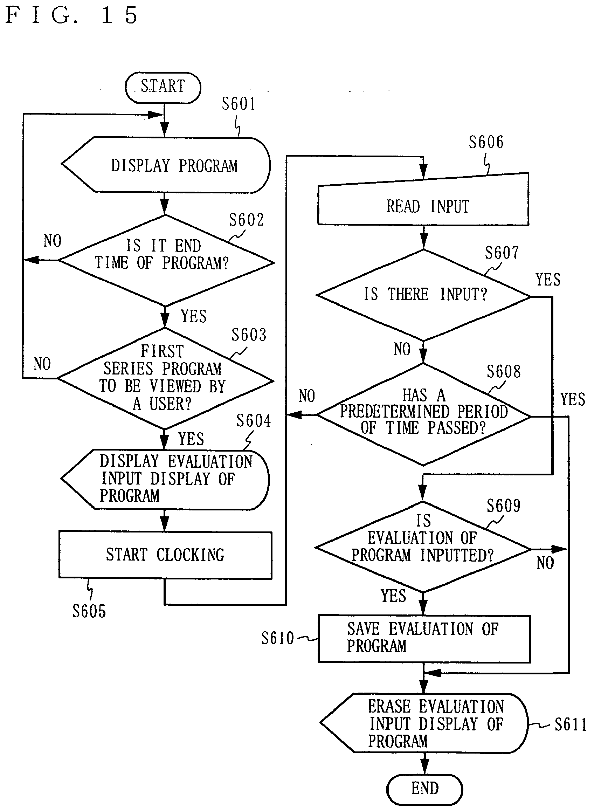

FIG. 15 is a flowchart of a program evaluation input process for the content selection device according to the sixth embodiment. In the program evaluation input process, the followings are executed.

(Step S601) The content selection device displays a program on the screen, and the user views the program. In the step, the UI control section 3 gives an instruction to the content reproduction section 13 to reproduce the program.

(Step S602) The process by the content selection device is to advance to step S601 when it is end time of the program, or to step S601 any other time. In the step, the UI control section 3 reads from the content property management section 4 the content property of the program which is currently being displayed, extracts the end time from the content property that has been read, and compares the extracted end time with the current time.

(Step S603) The process by the content selection device is to advance to step S604 when the viewed program is a series program which the user viewed for a first time, or to the step S601 any other time. Whether or not the viewed program is a series program is determined by using the content property which is extracted in the step S602. Also, whether or not the user has viewed the series program in the past is determined by using the profile stored in the profile management section 6. By using these two information, it can be determined that the viewed program is a series program and whether or not the user has viewed the series program for the first time.

(Step S604) The content selection device displays an evaluation input display of a program on the screen. In the step, the UI control section 3 outputs to the renderer section 7 renderer information to display a pop-up window 612 as shown in FIG. 14.

(Step S605) The content selection device starts clocking in the same manner as in the step S525.

(Step S606) The content selection device reads an input in the same manner as in the step S103.

(Step S607) The process by the content selection device is to advance to step S609 when there is an input in the step S605, or to step S608 any other time.

(Step S608) The process by the content selection device is to advance in the same manner as in the step S528 to step S611 when a predetermined time period has passed, or to step S606 any other time.

(Step S609) The process by the content selection device is to advance to step S610 when the evaluation on a program is inputted in the step S606, or to step S611 any other time.

(Step S610) The content selection device saves the evaluation of the program inputted in the step S606. The inputted evaluation of the program is, via the recommendation processing section 2, stored as profile in the profile management section 6.

(Step S611) The content selection device erases the evaluation input display on a program. As described above, the pop-up window 612 is erased after the inputted evaluation on the program is saved in the step S607, or when a predetermined time period has passed before the evaluation is inputted even though the pop-up window 612 was displayed.

As described above, the content selection device according to the present embodiment can learn the preference of the user without causing the user any trouble.

### (Seventh Embodiment)

In a seventh embodiment, a GUI display for presenting content which is to be recommended to the user, who has no knowledge on the operation method of the GUI display, will be described. In the present embodiment, a digital television broadcast in Japan is described as an example. Note that in the field of digital television broadcast, a word "NETWORK" is a technical term used as a synonym for a word "MEDIA".

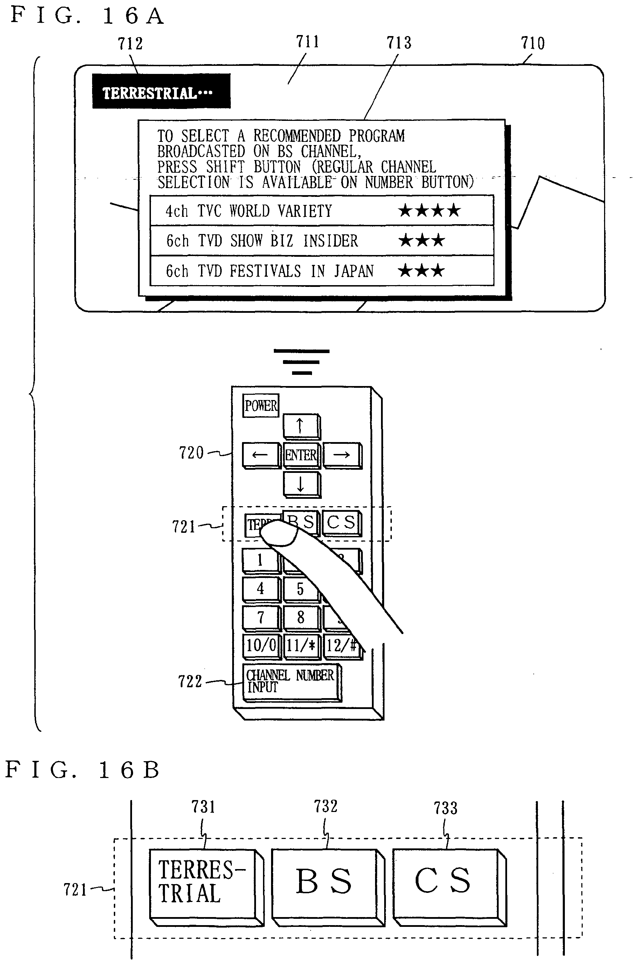

FIG. 16A is a diagram showing a GUI display for a content selection device according to the seventh embodiment, and a remote control for operating the content selection device. The user uses the remote control 720 as an input section 5 to control the content selection device. The remote control 720 can be the same remote control as the one for a general television receiver.

The remote control 720, as shown in FIG. 16A, has a media selection button 721, a number button, a channel number input button 722, a cursor shift button, and an Enter button. FIG. 16B is an enlarged view of the media selection button 721. As shown in FIG. 16B, the remote control 720, as the media selection button 721, has a terrestrial button 731, a BS button 732, and a CS button 733. These three buttons correspond to terrestrial digital television broadcast, BS digital television broadcast and a 110 CS digital television broadcast, respectively.

Within one media (network), each channel is identified by a three-digit number; and the channel number is entered by using the number button. However, inputting the three-digit number each time channel selection is changed is troublesome; each number button is, therefore, assigned with a channel number (the three-digit number) of a typical channel. By this, the user can select a typical channel by pressing the number button just once. When channel 103 of the BS digital television is assigned to "3" of the number button, for example, the user can press the number button "3" once to select the channel 103 of the BS digital television broadcast. Also, when entering a channel number by a method other than the one mentioned above, the user presses a channel number input button followed by a three consecutive press on the number button.

With a conventional content selection device, the user performs a channel selection by the following procedure. First, the user presses one of the three media selection buttons 721 (First Operation). Note that the first operation can be omitted when a media (network) is not to be changed before or after the channel selection. Then, the user presses a channel number input button (Second Operation). Note that the second operation can be omitted when the three-digit number is not to be inputted. Then, the user presses a number button as many times as a predetermined number of time (three times if the second operation is performed, once any other time)(Third Operation). By the aforementioned first through third operations, a channel is confirmed and the channel selection is completed. In this case, the content selection device can indicate the progress of the input on the screen while a channel is being selected.

Hereinafter, a channel selection procedure for the content selection device according to the seventh embodiment will be described with respect to the channel selection procedure for the conventional content selection device. The content selection device according to the present embodiment, as shown in FIG. 16A, displays, while a channel is being selected, an input progress display 712 and a pop-up window 713, both of which are overlay display superimposing on a program image 711 of a television broadcast, which is displayed in a display 710. The input progress display 712 indicates a degree of progress. In the pop-up window 713, a list of viewable content to be recommended (program) at the current time is indicated in the order of recommendation level thereof. The user, while the pop-up window 713 is being displayed, shifts a focus on the screen by pressing a cursor button on the remote controller 720, and presses an enter button in order to select a channel of the program on which the focus is given. Also, the user can ignore the pop-up window 713 and perform a procedure in the same manner as in the conventional method. When a channel is selected, the pop-up window 713 is erased.

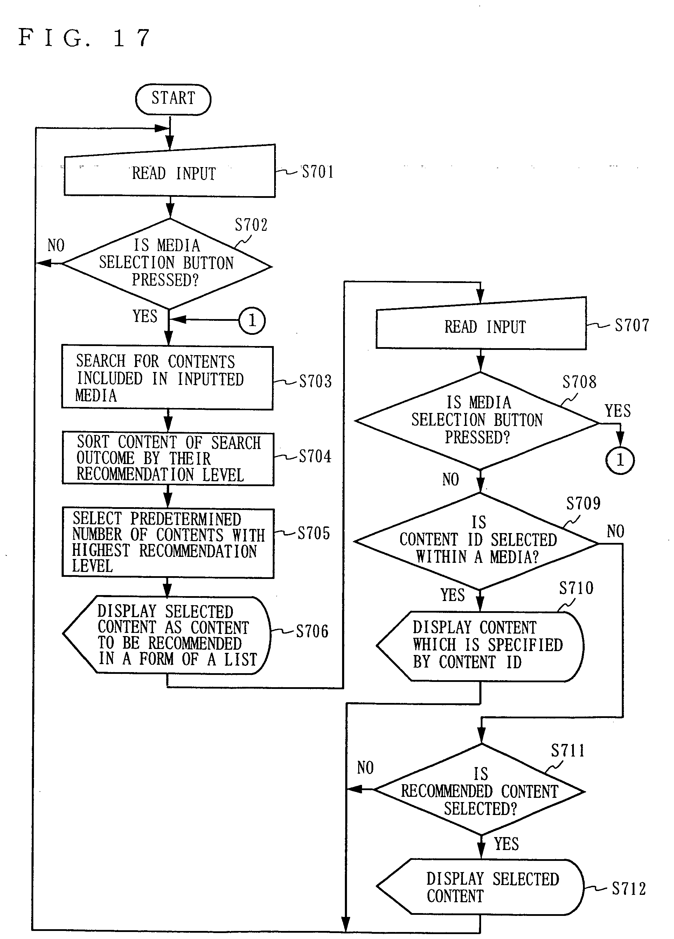

FIG. 17 is a flowchart of a channel selection candidate display process of the content selection device according to the seventh embodiment. In the channel selection candidate display process, the followings are executed.

(Step S701) The content selection device reads an input in the same manner as in the step S103.

(Step S702) The process by the content selection device is to advance to step S703 when the media selection input button is pressed, or to the step S701 any other time. That is, the process by the content selection device is to advance to step S703 when one of the terrestrial button 731, the BS button 732, and the CS button 733 is pressed.

(Step S703) The content selection device retrieves content (program) included in the media which is inputted in the step S701. In the step, the recommendation processing section 2 retrieves, by searching the content property stored in the content property management section 4, a group of programs, which is currently being broadcasted in the media inputted in the step S701.

(Step S704) The content selection device sorts the content of the search result by a recommendation level thereof. In the step, the recommendation processing section 2 calculates a recommendation level for each of the program discovered in the step S703. The recommendation level is calculated based on fitness level of a program with regards to the profile, which is stored in the profile management section 6, the degree of recommendation for the program found from a broadcast station, and an audience rating.

(Step S705) The content selection device selects a predetermined number of content (program) having highest recommendation level from among a plurality of programs discovered in the step S703.

(Step S706) The content selection device displays in a form of a list the content selected in the step S705 as the content which is to be recommended.

(Step S707) The content selection device reads an input in the same manner as in the step S103.

(Step S708) The process by the content selection device is to advance, in the same manner as in the step S702, to the step S703 when the media selection button is pressed, or to step S709 any other time.

(Step S709) The process by the content selection device is to advance to step S710 when a content ID is selected within a same media in the step S707, or to step S711 any other time. As described above, the process by the content selection device is to advance to step S710 when a channel number is inputted within a same network.

(Step S710) The content selection device displays on the screen the content which is specified by the content ID; and the user views the displayed content. After the step S710, the process by the content selection device is to advance to the step S701. By this, the user can view the recommended program while making a channel selection.

(Step S711) The process by the content selection device is to advance to step S712 when the content, which is recommended in the step S707 (which is found in the step S706), is selected, or to the step S701 any other time. As described above, the process by the content selection device is to advance to step S712 when any of the recommended content is selected by using a cursor button and an Enter button.

(Step S712) The content selection device displays the selected content on the screen, and the user views the content displayed on the screen. After the step S712, the process by the content selection device is to advance to the step S701.

As described above, the content selection device according to the present embodiment can recommend content to the user who does not know the operation method of the content recommendation function.

Note that the content selection device according to each embodiment described above can be constructed using a computer and a computer-readable recording medium having recorded thereon a program for the computer to execute the aforementioned content selection method.

### INDUSTRIAL APPLICABILITY

A content selection method, a device and a recording medium having stored thereon a program of the present invention can be used, due to a feature operable to recommend appropriate content to a user without burdening the user, at a situation where content is selected by using a GUI for a television receiver, an Internet broadcast receiver and a computer, which is connected to a content distribution system.

## Claims

1. A content selection method for selecting from among a plurality of programs a program which is to be recommended to a user, the content selection method comprising:
a program list display step for displaying an Electric Program Guide;
an input step for inputting an evaluation of a selected program which is included in the displayed Electric Program Guide;
a recommendation level calculation step for calculating a recommendation level for each program in the Electric Program Guide based on preference information of the user; and
an identification display step for displaying, in the Electric Program Guide, an identification for each of the programs, based on the calculated recommendation level, wherein
the recommendation level calculation step and the identification display step are, based on the preference information, respectively executed repeatedly to calculate the recommendation level and to display the identification for each of the programs one by one until input is conducted at the input step, and
when the evaluation is newly inputted at the input step, at the recommendation level calculation step, the preference information is immediately updated based on the inputted evaluation and the recommendation level for each program in the Electric Program Guide is newly calculated based on the updated preference information, and at the identification display step, the displayed identification of each of the programs in the Electric Program Guide is changed based on the newly calculated recommendation level.

2. The content selection method according to claim 1, wherein the identification display step displays the selected program having an icon which indicates an evaluation of the selected program which is evaluated in the input step.

3. A content selection device for selecting from among a plurality of programs a program which is to be recommended to a user, the content selection device comprising:
a program list display means for displaying an Electric Program Guide;
an input means for inputting an evaluation of a selected program which is included in the Electric Program Guide which is displayed by the program list display means; and
a control means for calculating a recommendation level for each program in the Electric Program Guide based on preference information of the user,
for displaying, in the Electric Program Guide displayed by the program list display means, an identification for each of the programs based on the calculated recommendation level, and for repeatedly calculating the recommendation level and repeatedly displaying the identification for each of the programs one by one until input is conducted by the input means, based on the preference information, wherein
when the evaluation is newly inputted by the input means, the control means, immediately updates the preference information based on the inputted evaluation, newly calculates the recommendation level for each of the programs in the Electric Program Guide based on the updated preference information, and changes the displayed identification of each of the programs in the Electric Program Guide based on the newly calculated recommendation level.

4. The content selection device according to claim 3, wherein the control means displays the selected program having an icon which indicates an evaluation of the selected program which is evaluated in the input means.

5. A computer readable recording medium having recorded thereon a program for causing a computer to perform a content selection method which is specified in claim 1 or claim 2.

## Patentansprüche

1. Inhaltsauswahlverfahren zum Auswählen eines einem Anwender zu empfehlenden Programms aus einer Vielzahl von Programmen, wobei das Inhaltsauswahlverfahren folgendes aufweist:
einen Programmlistenanzeigeschritt zum Anzeigen eines elektronischen Programmführers (Electronic Program Guide);
einen Eingabeschritt zum Eingeben einer Bewertung eines ausgewählten Programms, das in dem angezeigten elektronischen Programmführer mitumfasst ist;
einen Empfehlungsniveauberechnungsschritt zum Berechnen eines Empfehlungsniveaus für jedes Programm in dem elektronischen Programmführer auf Basis von Präferenzinformationen des Anwenders;
und einen Kennungsanzeigeschritt zum Anzeigen, in dem elektronischen Programmführer, einer Kennung für jedes der Programme auf Basis des berechneten Empfehlungsniveaus,
wobei der Empfehlungsniveauberechnungsschritt und der Kennungsanzeigeschritt, auf Basis der Präferenzinformationen, jeweils wiederholt zur Berechnung des Empfehlungsniveaus und zur Anzeige der Kennung für jedes der Programme der Reihe nach bis zur Durchführung einer Eingabe im Eingabeschritt ausgeführt werden, und
wenn die Bewertung im Eingabeschritt neu eingegeben wird, werden, im Empfehlungsniveauberechnungsschritt, die Präferenzinformationen sofort auf Basis der eingegebenen Bewertung aktualisiert, und das Empfehlungsniveau für jedes Programm in dem elektronischen Programmführer wird auf Basis der aktualisierten Präferenzinformationen neu berechnet, und im Kennungsanzeigeschritt wird die angezeigte Kennung für jedes der Programme in dem elektronischen Programmführer auf Basis der neu berechneten Empfehlungsniveau geändert.

2. Inhaltsauswahlverfahren nach Anspruch 1, wobei der Kennungsanzeigeschritt das ausgewählte Programm mit einem Symbol anzeigt, das eine Bewertung des ausgewählten Programms angibt, das im Eingabeschritt bewertet wird.

3. Inhaltsauswahleinrichtung zum Auswählen eines Programms aus einer Vielzahl von Programmen, das einem Anwender empfohlen werden soll, wobei die Inhaltsauswahleinrichtung folgendes aufweist:
ein Programmlistenanzeigemittel zum Anzeigen eines elektronischen Programmführers;
ein Eingabemittel zum Eingeben einer Bewertung eines ausgewählten Programms, das in dem elektronischen Programmführer mitumfasst ist, der von dem Programmlistenanzeigemittel angezeigt wird;
und ein Steuermittel zum Berechnen eines Empfehlungsniveaus für jedes Programm in dem elektronischen Programmführer auf Basis von Präferenzinformationen des Anwenders,
zum Anzeigen, in dem durch das Programmlistenanzeigemittel angezeigten elektronischen Programmführer, einer Kennung für jedes der Programme auf Basis des berechneten Empfehlungsniveaus, und zum wiederholten Berechnen des Empfehlungsniveaus und wiederholten Anzeigen der Kennung für jedes der Programme der Reihe nach, bis eine Eingabe durch das Eingabemittel durchgeführt wird, auf Basis der Präferenzinformationen,
wobei, wenn die Bewertung durch das Eingabemittel neu eingegeben wird, das Steuermittel sofort die Präferenzinformationen auf Basis der eingegebenen Bewertung aktualisiert, das Empfehlungsniveau für jedes der Programme in dem elektronischen Programmführer auf Basis der aktualisierten Präferenzinformationen neu berechnet und die angezeigte Kennung von jedem der Programme in dem elektronischen Programmführer auf Basis des neu berechneten Empfehlungsniveaus ändert.

4. Inhaltsauswahleinrichtung nach Anspruch 3, wobei das Steuermittel das ausgewählte Programm mit einem Symbol anzeigt, das eine Bewertung des ausgewählten Programms angibt, das in dem Eingabemittel bewertet wird.

5. Computerlesbares Aufzeichnungsmedium mit einem darauf aufgezeichneten Programm, um einen Computer zu veranlassen, ein Inhaltsauswahlverfahren durchzuführen, das in Anspruch 1 oder Anspruch 2 dargelegt ist.

## Revendications

1. Procédé de sélection de contenu pour sélectionner parmi une pluralité de programmes un programme qui doit être recommandé à un utilisateur, le procédé de sélection de contenu comprenant :
une étape d'affichage de liste de programmes pour afficher un Guide de programme électrique ;
une étape d'entrée pour entrer une évaluation d'un programme sélectionné qui est inclus dans le Guide de programme électrique affiché ;
une étape de calcul de niveau de recommandation pour calculer un niveau de recommandation pour chaque programme dans le Guide de programme électrique sur la base d'informations de préférence de l'utilisateur ; et
une étape d'affichage d'identification pour afficher, dans le Guide de programme électrique, une identification pour chacun des programmes, sur la base du niveau de recommandation calculé, où
l'étape de calcul de niveau de recommandation et l'étape d'affichage d'identification sont, sur la base des informations de préférence, exécutées respectivement de façon répétée pour calculer le niveau de recommandation et pour afficher l'identification pour chacun des programmes un par un jusqu'à ce que l'entrée soit effectuée à l'étape d'entrée, et
lorsque l'évaluation est nouvellement entrée à l'étape d'entrée, à l'étape de calcul de niveau de recommandation, les informations de préférence sont immédiatement mises à jour sur la base de l'évaluation entrée et le niveau de recommandation pour chaque programme dans le Guide de programme électrique est nouvellement calculé sur la base des informations de préférence mises à jour, et à l'étape d'affichage d'identification, l'identification affichée de chacun des programmes dans le Guide de programme électrique est changée sur la base du niveau de recommandation nouvellement calculé.

2. Procédé de sélection de contenu selon la revendication 1, dans lequel l'étape d'affichage d'identification affiche le programme sélectionné ayant une icône qui indique une évaluation du programme sélectionné qui est évalué lors de l'étape d'entrée.

3. Dispositif de sélection de contenu pour sélectionner parmi une pluralité de programmes un programme qui doit être recommandé à un utilisateur, le dispositif de sélection de contenu comprenant :
un moyen d'affichage de liste de programmes pour afficher un Guide de programme électrique ;
un moyen d'entrée pour entrer une évaluation d'un programme sélectionné qui est inclus dans le Guide de programme électrique qui est affiché par le moyen d'affichage de liste de programmes ; et
un moyen de commande pour calculer un niveau de recommandation pour chaque programme dans le Guide de programme électrique sur la base d'informations de préférence de l'utilisateur,
pour afficher, dans le Guide de programme électrique affiché par le moyen d'affichage de liste de programmes, une identification pour chacun des programmes sur la base du niveau de recommandation calculé, et pour calculer de façon répétée le niveau de recommandation et afficher de façon répétée l'identification pour chacun des programmes un par un jusqu'à ce que l'entrée soit effectuée par le moyen d'entrée, sur la base des informations de préférence, où
lorsque l'évaluation est nouvellement entrée par le moyen d'entrée, le moyen de commande met à jour immédiatement les informations de préférence sur la base de l'évaluation entrée, calcule nouvellement le niveau de recommandation pour chacun des programmes dans le Guide de programme électrique sur la base des informations de préférence mises à jour, et change l'identification affichée de chacun des programmes dans le Guide de programme électrique sur la base du niveau de recommandation nouvellement calculé.

4. Dispositif de sélection de contenu selon la revendication 3, dans lequel le moyen de commande affiche le programme sélectionné ayant une icône qui indique une évaluation du programme sélectionné qui est évalué dans le moyen d'entrée.

5. Support d'enregistrement lisible par ordinateur sur lequel est enregistré un programme pour amener un ordinateur à exécuter un procédé de sélection de contenu qui est spécifié dans la revendication 1 ou la revendication 2.
